# EUROPEAN PATENT APPLICATION

(11) **EP 3 690 874 A1**
(43) Date of publication of application: **05.08.2020**
(21) Application number: 18857810.8
(22) Date of filing: 11.09.2018
(51) Int. Cl.: G10K 11/16, B32B 3/24, B32B 15/01, E01F 8/00, E04B 1/86

(54) **SOUNDPROOFING STRUCTURE**

(30) Priority: 25.09.2017 JP 2017183355
(71) Applicant: FUJIFILM Corporation, Tokyo 106-8620 (JP)
(72) Inventor: HAKUTA Shinya, Ashigara-kami-gun Kanagawa 258-8577 (JP); YAMAZOE Shogo, Ashigara-kami-gun Kanagawa 258-8577 (JP); OHTSU Akihiko, Ashigara-kami-gun Kanagawa 258-8577 (JP)
(74) Representative: Hoffmann Eitle
(86) International application number: PCT/JP2018/033623
(87) International publication number: WO 2019/059046

(57) **Abstract**

Provided is a soundproof structure that can obtain high soundproofing performance and suitably maintain characteristics of a forming material. A soundproof structure includes: a microperforated sheet having a plurality of through-holes penetrating in a thickness direction, in which an average opening diameter of the through-holes in a main surface of the microperforated sheet is 0.1 µm or more and less than 100 µm, at least some of the plurality of through-holes are a through-hole A that has a shape having an internal maximum hole diameter, and in the through-hole A, assuming that a minimum hole diameter is φ₁ and a maximum hole diameter is φ₂, 1 < φ₂/φ₁ ≤ 5 is satisfied.

## Description

### BACKGROUND OF THE INVENTION

### 1. Field of the Invention

The present invention relates to a soundproof structure.

### 2. Description of the Related Art

A microperforated panel (MPP) (microperforated sheet) having micro through-holes has a structure constituted of a thin film and capable of absorbing sound efficiently in a broadband and has advantages such as lightweight, compact, more durable than a porous sound absorbing body, and less dust generation.

For example, JP2008-218197A discloses a perforated plate which is disposed between a plate-shaped closing member or a wall-shaped closing member to form an air layer and which has a large number of through-holes, in which the through-hole has a maximum hole diameter portion formed on one surface of the perforated plate and a minimum hole diameter portion formed on the other surface of the perforated plate and is expanded more outward than a straight line which interconnecting the maximum hole diameter portion with the minimum hole diameter portion in a thickness direction of the perforated plate viewed from a cross-sectional view.

WO2016/060037A discloses an aluminum plate having a plurality of through-holes that penetrate in a thickness direction and including: through-holes A which have an average opening diameter of the through-holes of 0.1 µm or more and less than 100 µm and have a shape in which a maximum diameter Ra is formed inside and the maximum diameter Ra and a minimum diameter Rb satisfy 1 > Rb/Ra ≥ 0.1. It is described that the aluminum plate can be used as a sound absorbing material (paragraph [0041]).

The principle of sound absorption by a microperforated sheet is considered due to friction in a case where sound waves (air) pass through micro through-holes. Therefore, forming materials of the microperforated sheet are not limited, and a wide range of materials can be used. For this reason, the forming materials of the microperforated sheet can be selected in accordance with various characteristics required according to an installation position of the microperforated sheet.

For example, in a case where a metallic luster is desired to be imparted to the microperforated sheet, light reflectance is desired to be increased, metal texture is desired to be imparted, or the like, these characteristics can be imparted to the microperforated sheet by using a metal material. Alternatively, in a case where transparency is desired to be imparted, resin texture is desired to be imparted, or the like, these characteristics can be imparted to the microperforated sheet by using a resin material. In addition, since a sound absorption effect of the microperforated sheet is due to thermoviscous resistance in the micro through-holes, other materials can be selected. For example, in a case of emphasizing fabric texture, textile, felt, or the like is selected as a material, and the micro through-holes are formed in the textile or felt to use the microperforated sheet.

### SUMMARY OF THE INVENTION

In order to obtain characteristics such as appearance and touch feeling of the forming material of the microperforated sheet, it is necessary to reduce an opening diameter of the through-holes formed on the microperforated sheet. For example, in a case where a large opening diameter is large, the through-holes are easily visible, or in the case of the large opening diameter, even though an opening ratio is even, the number of through-holes is small. Therefore, the through-holes are easily visually recognized as unevenness, and the appearance is different from the original material.

However, from the viewpoint of sound absorption characteristics, it is necessary to increase the opening ratio in the case of the opening diameter of the through-hole is small. Therefore, even though the opening diameter of the through-hole is small, it is difficult to maintain the characteristics such as appearance and touch feeling of the forming material as it is due to a large number of the through-holes.

An object of the present invention is to solve the problem of the related art and provide a soundproof structure that can obtain high soundproofing performance and suitably maintain characteristics of a forming material.

As a result of intensive studies to solve the above problems, the present inventors have found that the above problems can be solved and have achieved the present invention by a soundproof structure including: a microperforated sheet having a plurality of through-holes penetrating in a thickness direction, in which an average opening diameter of the through-holes in a main surface of the microperforated sheet is 0.1 µm or more and less than 100 µm, at least some of the plurality of through-holes are a through-hole A that has a shape having an internal maximum hole diameter, and in the through-hole A, assuming that a minimum hole diameter is φ₁ and a maximum hole diameter is φ₂, 1 < φ₂/φ₁ ≤ 5 is satisfied.

That is, the present inventors have found that the above problems can be solved by the following configurations.
[1] A soundproof structure comprising a microperforated sheet having a plurality of through-holes penetrating in a thickness direction, in which an average opening diameter of the through-holes in a main surface of the microperforated sheet is 0.1 µm or more and less than 100 µm, at least some of the plurality of through-holes are a through-hole A that has a shape having an internal maximum hole diameter, and in the through-hole A, assuming that a minimum hole diameter is φ₁ and a maximum hole diameter is φ₂, 1 < φ₂/φ₁ ≤ 5 is satisfied.
[2] The soundproof structure according to [1], in which in a case where the minimum hole diameter φ₁ (µm) and the maximum hole diameter φ₂ (µm) of the through-hole A are in a range of 2 ≤ φ₂/φ₁ ≤ 5, assuming that the average opening ratio of the through-holes is ρ_{c}, an optimum opening ratio in a case where the through-hole has a straight tube shape and has a hole diameter of the minimum hole diameter φ₁ is ρₛ, and C is a positive constant from 0.20 to 0.70, the optimum opening ratio ρₛ is ρₛ = 18.7 × φ₁^{-2.04} and ρ_{c}/ρₛ = 0.30 × ln(φ₁) - C is satisfied.
[3] The soundproof structure according to [1], in which in a case where the minimum hole diameter φ₁ (µm) and the maximum hole diameter φ₂ (µm) of the through-hole A are in a range of 1 < φ₂/φ₁ < 2, assuming that the average opening ratio of the through-holes is ρ_{c}, an optimum opening ratio in a case where the through-hole has a straight tube shape and has a hole diameter of the minimum hole diameter φ₁ is ρₛ, and C is a positive constant from 0.20 to 0.70, the optimum opening ratio ρₛ is ρₛ = 18.7 × φ₁^{-2.04} and ρₛ × (0.30 × ln(φ₁) - C) < ρ_{c} < ρₛ is satisfied.
[4] The soundproof structure according to [2] or [3], in which among the plurality of through-holes A, through-hole shapes having a shape having the minimum hole diameter φ₁ on both main surfaces of the microperforated sheet are largest in number, and the constant C is 0.20 or more and 0.48 or less.
[5] The soundproof structure according to [2] or [3], in which among the plurality of through-holes A, through-hole shapes having a shape having the minimum hole diameter φ₁ on one main surface of the microperforated sheet and a hole diameter φ₃ satisfying φ₁ < φ₃ < φ₂ on the other main surface are largest in number, and the constant C is 0.46 or more and 0.70 or less.
[6] The soundproof structure according to any one of [1] to [5], in which a ratio of the through-holes A to all through-holes is 30% or more.
[7] The soundproof structure according to any one of [1] to [6], in which the through-hole A has the minimum hole diameter on at least one main surface.
[8] The soundproof structure according to any one of [1] to [7], in which the microperforated sheet is configured to laminate two microstructure sheets, the microstructure sheet has a plurality of tapered-holes which are formed to have a maximum diameter on one surface and a minimum diameter on the other surface, the two microstructure sheets are laminated so that surfaces thereof on a side where the tapered-holes have the maximum diameter face each other, and positions of the tapered-holes on each of the two microstructure sheets in a surface direction are aligned with each other to form the through-hole A.
[9] The soundproof structure according to any one of [1] to [8], in which a material of the microperforated sheet is metal.
[10] The soundproof structure according to any one of [1] to [9], in which the plurality of through-holes are randomly arranged.
[11] The soundproof structure according to any one of [1] to [10], further comprising a porous sound absorbing body disposed in contact with one main surface of the microperforated sheet.
[12] The soundproof structure according to [11], further comprising a wall member on a side opposite to the microperforated sheet of the porous sound absorbing body, in which the porous sound absorbing body and the wall member are disposed in a state in which the porous sound absorbing body and the wall member are at least partially in contact with each other.
[13] The soundproof structure according to any one of [1] to [11], further comprising a wall member disposed to be spaced from the microperforated sheet.
[14] The soundproof structure according to any one of [1] to [13], further comprising a frame disposed in contact with one main surface of the microperforated sheet.
[15] The soundproof structure according to any one of [1] to [14], in which the microperforated sheet is used as a part of a wall or a gap closing member.

According to the present invention, a soundproof structure that can obtain high soundproofing performance and suitably maintain characteristics of a forming material can be provided.

### BRIEF DESCRIPTION OF THE DRAWINGS

Fig. 1 is a plan view conceptually showing an example of a soundproof structure of the present invention.
Fig. 2 is a cross-sectional view taken along line B-B of the soundproof structure shown in Fig. 1.
Fig. 3 is a cross-sectional view schematically showing an example of a through-hole A.
Fig. 4 is a cross-sectional view schematically showing another example of the through-hole A.
Fig. 5 is a graph showing the relationship between an opening diameter and an optimum opening ratio.
Fig. 6 is a graph showing the relationship between the opening diameter and a maximum absorbance.
Fig. 7 is a graph showing the relationship between a magnification ratio and a ratio of the optimum opening ratio.
Fig. 8 is a graph showing the relationship between a minimum hole diameter and the ratio of the optimum opening ratio.
Fig. 9 is a graph showing the relationship between the minimum hole diameter and the ratio of the optimum opening ratio.
Fig. 10 is a graph showing the relationship between the magnification ratio and the ratio of the optimum opening ratio.
Fig. 11 is a graph showing the relationship between a distance and resolution of eyes.
Fig. 12 is a cross-sectional view schematically showing an example of a microperforated sheet.
Fig. 13 is a cross-sectional view schematically showing another example of the microperforated sheet.
Fig. 14 is a cross-sectional view schematically showing another example of the soundproof structure of the present invention.
Fig. 15 is a cross-sectional view schematically showing the other example of the soundproof structure of the present invention.
Fig. 16 is a cross-sectional view schematically showing the other example of the soundproof structure of the present invention.
Fig. 17 is a cross-sectional view schematically showing the other example of the soundproof structure of the present invention.
Fig. 18 is a cross-sectional view schematically showing the other example of the soundproof structure of the present invention.
Fig. 19 is a cross-sectional view schematically showing the other example of the soundproof structure of the present invention.
Fig. 20 is a cross-sectional view schematically showing the other example of the soundproof structure of the present invention.
Fig. 21 is a cross-sectional view schematically showing the other example of the soundproof structure of the present invention.
Fig.22 is a cross-sectional view schematically showing the other example of the soundproof structure of the present invention.
Fig. 23 is a cross-sectional view schematically showing the other example of the soundproof structure of the present invention.
Fig. 24 is a cross-sectional view schematically showing the other example of the soundproof structure of the present invention.
Fig. 25 is a front view of the soundproof structure shown in Fig. 24.
Fig. 26 is a cross-sectional view schematically showing the other example of the soundproof structure of the present invention.
Fig. 27 is a graph showing the relationship between frequency and absorbance.
Fig. 28 is a graph showing the relationship between the frequency and the absorbance.
Fig. 29 is a graph showing the relationship between the frequency and the absorbance.
Fig. 30 is a graph showing the relationship between the frequency and the absorbance.
Fig. 31 is a graph showing the relationship between the minimum hole diameter, the opening ratio, and the absorbance.

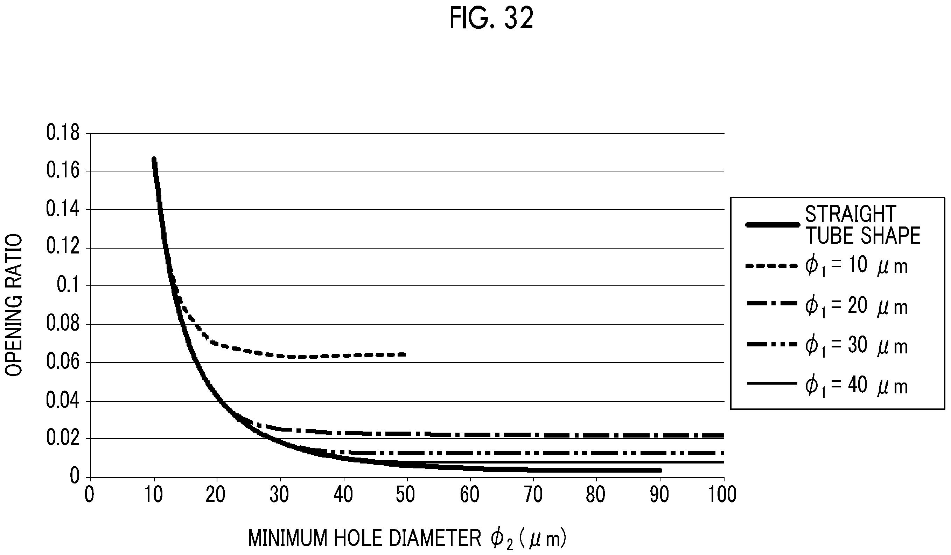

Fig. 32 is a graph showing the relationship between the maximum hole diameter and the opening ratio.

### DESCRIPTION OF THE PREFERRED EMBODIMENTS

Hereinafter, the present invention will be described in detail.

The description of constituent elements described below is made based on representative embodiments of the present invention, but the present invention is not limited to such embodiments.

The numerical range expressed by using "∼" in this specification means a range including numerical values described before and after "∼" as a lower limit value and an upper limit value.

In the present specification, "orthogonal" and "parallel" include an error range allowed in the technical field to which the present invention belongs. For example, "orthogonal" and "parallel" mean a range that the angle is within ± 10° with respect to strict orthogonality or parallelism, and an error with respect to strict orthogonality or parallelism is preferably 5° or less, more preferably 3° or less.

In the present specification, "same" and "the same" include an error range generally allowed in the technical field. In addition, in the present specification, in a case of describing "entirety", "any", "entire surface" or the like, an error range generally allowed in the technical field is included in addition to corresponding to 100%, for example, 99% or more, 95% or more, or 90% or more.

### [Soundproof structure]

A soundproof structure of an embodiment of the present invention including: a microperforated sheet having a plurality of through-holes penetrating in a thickness direction, in which an average opening diameter of the through-holes in a main surface of the microperforated sheet is 0.1 µm or more and less than 100 µm, at least some of the plurality of through-holes are a through-hole A that has a shape having an internal maximum hole diameter, and in the through-hole A, assuming that a minimum hole diameter is φ₁ and a maximum hole diameter is φ₂, 1 < φ₂/φ₁ ≤ 5 is satisfied.

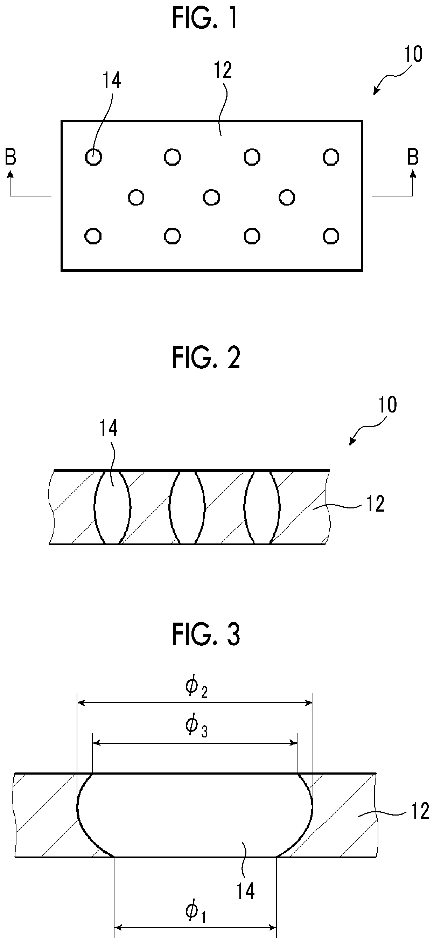

A configuration of the soundproof structure according to the embodiment of the present invention will be described with reference to Figs. 1 and 2.

Fig. 1 is a schematic front view showing an example of a suitable embodiment of the soundproof structure of the present invention, and Fig. 2 is a cross-sectional view taken along line B-B in Fig. 1.

As shown in Figs. 1 and 2, a soundproof structure 10 has a microperforated sheet 12 having a plurality of through-holes 14 penetrating in a thickness direction.

The plurality of through-holes 14 formed on the microperforated sheet 12 have an average opening diameter of 0.1 µm or more and less than 100 µm, a shape having an internal maximum hole diameter φ₂, and a through-hole A having a shape in which the maximum hole diameter φ₂ and a minimum hole diameter φ₁ satisfies 1 < φ₂/φ₁ ≤ 5.

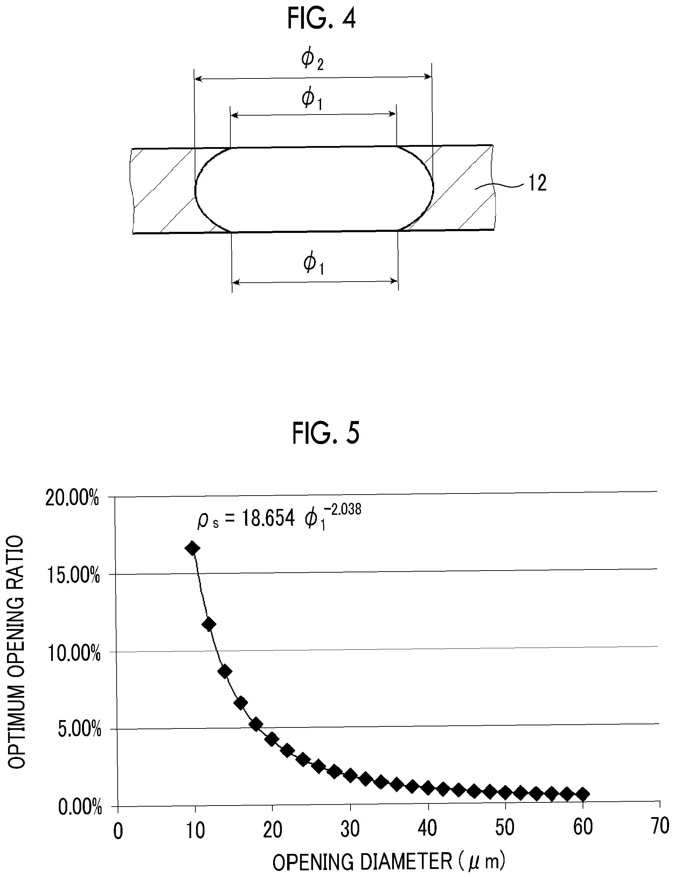

Hereinafter, the shape of the through-hole 14 will be described with reference to Figs. 3 and 4.

Fig. 3 is an enlarged cross-sectional view showing an example of the through-hole 14 of the microperforated sheet 12 shown in Fig. 1.

As shown in Fig. 3, in a cross-section parallel to an axial direction of the through-hole 14, the through-hole 14 has a shape having: a minimum hole diameter φ₁ on one main surface of the microperforated sheet 12 (main surface on the lower side in Fig. 3); an internal maximum hole diameter φ₂ of the through-hole 14, in which the hole diameter gradually increases from the one main surface toward the inside of the through-hole 14; and a hole diameter φ₃, on the other main surface, in which the hole diameter gradually decreases toward the other main surface (main surface on the upper side in Fig. 3) and which is greater than the minimum hole diameter φ₁ and smaller than the maximum hole diameter φ₂.

The main surface of the microperforated sheet 12 is a surface having the largest area in a case where it is assumed that the through-holes are not formed, and the microperforated sheet 12 has two main surfaces.

Fig. 4 is an enlarged cross-sectional view showing another example of the through-hole 14 of the microperforated sheet 12 shown in Fig. 1.

As shown in Fig. 4, in a cross-section parallel to an axial direction of the through-hole 14, the through-hole 14 has a shape having: a minimum hole diameter φ₁ on one main surface of the microperforated sheet 12 (main surface on the lower side in Fig. 4); and an internal maximum hole diameter φ₂ inside the through-hole 14, in which the hole diameter gradually increases from the one main surface toward the inside of the through-hole 14, and the hole diameter gradually decreases toward the other main surface (main surface on the upper side in Fig. 4) so as to be the minimum hole diameter φ₁ on the other main surface.

The through-hole 14 shown in Figs. 3 and 4 is the through-hole A in the present invention. The through-hole A does not have a straight tube shape or a tapered shape, but has a shape in which the hole diameter is expanded inside the through-hole. In the following description, as shown in Fig. 3, a through-hole A that has the shape having a minimum hole diameter φ₁ on one main surface is referred to as a through-hole with a shape having different hole diameters, and as shown in Fig. 4, a through-hole A that has minimum hole diameters φ₁ on both main surfaces is referred to as a through-hole with a shape having the same hole diameters.

The through-hole A may have only the through-hole with the same hole diameters, only the through-hole with the shape having different hole diameters, or both through-holes with the shape having the same hole diameters and the shape having different hole diameters.

In the present invention, a ratio φ₂/φ₁ between the maximum hole diameter φ₂ and the minimum hole diameter φ₁ in one through-hole A satisfies 1 1 < φ₂/φ₁ ≤ 5.

The microperforated sheet including the soundproof structure according to the embodiment of the present invention has micro through-holes having the average opening diameter of 0.1 µm or more and less than 100 µm so that in a case where sound passes through the micro through-holes, the sound is absorbed by friction generated between an inner wall surface of the through-hole and air.

As described above, in order to obtain characteristics such as appearance and touch feeling of the forming material of the microperforated sheet, it is necessary to reduce the average opening diameter and an average opening ratio of the through-holes formed on the microperforated sheet. However, from the viewpoint of sound absorption characteristics, it is necessary to increase the average opening ratio in a case where the average opening diameter of the through-holes is small, and it is necessary to increase the average opening diameter in a case where the average opening ratio of the through-holes is low. Therefore, it is difficult to maintain the characteristics such as appearance and touch feeling of the forming material as it is, by strengthening sound absorption characteristics of the microperforated sheet and decreasing the average opening diameter and the average opening ratio of the through-holes.

On the other hand, in the soundproof structure according to the embodiment of the present invention, the through-hole A formed on the microperforated sheet has the shape having the internal maximum hole diameter φ₂ and the shape in which the maximum hole diameter φ₂ and the minimum hole diameter φ₁ satisfies 1 < φ₂/φ₁ ≤ 5.

According to the study conducted by the present inventors, it is found that even though a shape of the through-hole is formed to be the shape having the internal maximum hole diameter to reduce the opening diameter and the opening ratio on a surface of the microperforated sheet, higher sound absorption characteristics can be obtained than the case of the through-hole having a straight tube shape. Therefore, the soundproof structure can be configured to obtain the high sound absorption characteristics in broadband and maintain the characteristics of a forming material such as appearance and touch feeling by reducing influence of the through-hole on the surface.

Hereinafter, a relationship between the maximum hole diameter φ₂, the minimum hole diameter φ₁, and the sound absorption characteristics will be described using results of simulation.

The microperforated sheet having the through-holes can be modeled according to Maa formula in a case where the through-hole has the straight tube shape, but the micro through-hole having a complicated shape as in the present invention cannot be handled analytically. The Maa formula is for calculating the complex acoustic impedance of the microperforated sheet from the thickness, the opening diameter, and the opening ratio of the microperforated sheet shown in "Potential of microperforated panel absorber. Dah-You Maa. The Journal of Acoustic Society of America 104, 2861 (1998)" by DYMaa.

The present inventors have used in an acoustic module of the finite element method calculation software COMSOL ver 5.3 (COMSOL Corporation). A hole shape was converted into a CAD model and put into COMSOL, and the relationship between a micro hole shape and transmittance, reflectance, and absorbance was directly calculated. The model was implemented on a two-dimensional axisymmetric model. Thermoviscous acoustic physics was set for the through-hole portion and periphery thereof, and acoustic physics was set for a portion far from a film, and the calculation was performed in combination. By performing the calculation including thermoviscosity, it is possible to perform the calculation including a frictional phenomenon and sound absorption accompanied by the frictional phenomenon generated from the through-holes. In addition, a ratio of an area of the through-hole portion and an area of the firm portion was changed to calculate the difference of the opening ratio.

As described above, even in a case where the through-hole shape is not a straight tube shape, the calculation for absorption is possible by using simulation.

Regarding the absorbance, a plane incident sound is incident from the front of the microperforated sheet and the transmittance and the reflectance are evaluated respectively so that a ratio of which sound is absorbed by air viscosity is evaluated.

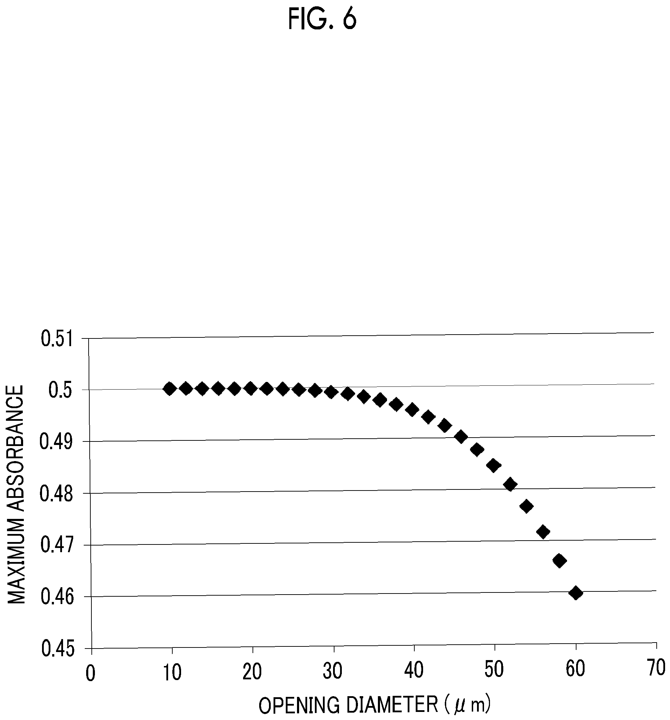

First, regarding a case where the shape of the through-hole is the straight tube shape, the absorbance is calculated by changing the opening ratio with respect to various opening diameters, and an opening ratio in which the absorbance is maximized is obtained as an optimum opening ratio. The relationship between the opening diameter and the optimum opening ratio is shown in Table 1 and Fig. 5. The relationship between the opening diameter and the absorbance (maximum absorbance) at the optimum opening ratio is shown in Fig. 6. In this case, it was also confirmed to coincide with the calculation using the Maa model described above.

The simulation was performed by setting a thickness of the microperforated sheet to 20 µm and a frequency of sound to be absorbed to 3000 Hz. The opening ratio was calculated every 0.001 (0.1%).

**[Table 1]**

| Opening diameter µm | Optimum opening ratio |
|---|---|
| 10 | 16.63% |
| 15 | 7.62% |
| 20 | 4.25% |
| 25 | 2.70% |
| 30 | 1.83% |
| 35 | 1.34% |
| 40 | 0.99% |
| 45 | 0.81% |
| 50 | 0.63% |
| 55 | 0.55% |
| 60 | 0.47% |
| 65 | 0.44% |
| 70 | 0.39% |
| 75 | 0.38% |

From Table 1, Figs. 5 and 6, it can be seen that the maximum absorbance is 50% and hardly changes at the opening diameter of 10 µm to 30 µm and decreases at a diameter larger than 30 µm. In addition, it can be seen that the optimum opening ratio increases as the opening diameter decreases. Furthermore, assuming that the optimum opening ratio is ρₛ and the opening diameter is φ₁, the optimum opening ratio ρₛ is ρₛ = 18.7 × φ₁^{-2.04} in a case where an approximate expression of the relationship between the optimum opening ratio ρₛ and the opening diameter φ₁ is obtained from Fig. 5.

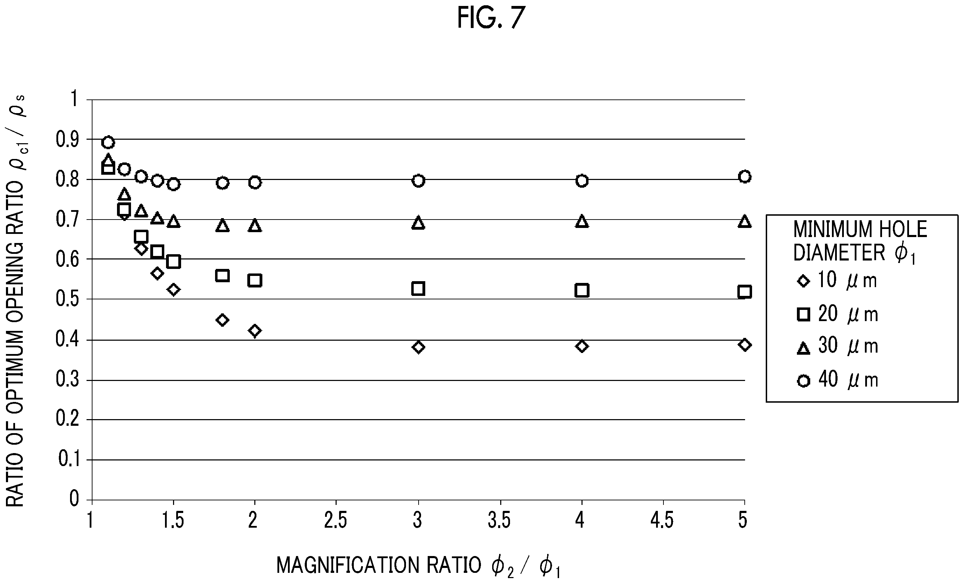

Next, in a case of the shape of the through-hole with the shape having the same hole diameters as shown in Fig. 4, the absorbance was calculated by variously changing a value of the maximum hole diameter φ₂ with respect to respective cases were the minimum hole diameter φ₁ is 10 µm, 20 µm, 30 µm, and 40 µm, and an opening ratio ρ_{c1} having the maximized absorbance (optimum opening ratio) was obtained. The relationship between the ratio φ₂/φ₁ of the maximum hole diameter φ₂ to the minimum hole diameter φ₁ (also referred to as a magnification ratio φ₂/φ₁) and a ratio ρ_{c1}/ρₛ of the optimum opening ratio ρ_{c1} to the optimum opening ratio ρₛ in the case of a straight tube shape is shown Fig. 7.

The through-hole has the maximum hole diameter φ₂ at a center in the thickness direction of the microperforated sheet and has a shape in which the minimum hole diameter φ₁ on the surface and the internal maximum hole diameter φ₂ are connected by a sin curve.

It can be seen from Fig. 7 that in a range where the magnification ratio φ₂/φ₁ is small (a range of 1 < φ₂/φ₁ < 2), the ratio ρ_{c1}/ρₛ of the optimum opening ratio ρ_{c1} to the optimum opening ratio ρₛ in the case of a straight tube shape decreases as the magnification ratio φ₂/φ₁ increases. That is, it can be seen that the larger the magnification ratio φ₂/φ₁, the smaller the optimum opening ratio ρ_{c1} in the case of the shape having the same hole diameters than the optimum opening ratio ρₛ in the case of a straight tube shape.

In addition, it can be seen that in a range where the magnification ratio φ₂/φ₁ is large (a range of 2 ≤ φ₂/φ₁ ≤ 5), the ratio ρ_{c1}/ρₛ is substantially constant at each minimum hole diameter φ₁. That is, it can be seen that the optimum opening ratio ρ_{c1} in the case of the shape having the same hole diameters converges to a certain value in a range where the magnification ratio φ₂/φ₁ is more than twice as large.

Next, the magnification ratio φ₂/φ₁ was set to 5 times so as to perform a simulation by variously changing the minimum hole diameter φ₁, and the ratio ρ_{cl}/ρₛ of the optimum opening ratio was obtained.

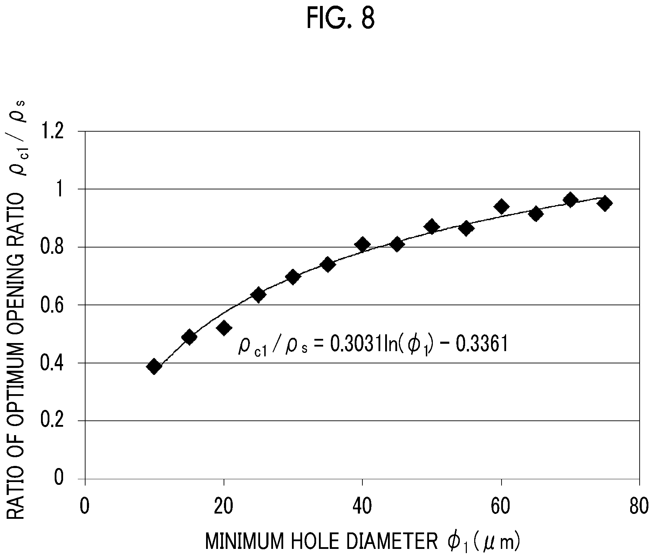

The results are shown in Fig. 8 and Table 2.

**[Table 2]**

| Minimum hole diameter ϕ₁ µm | Opening ratio of shape having the same hole diameters ρ_{c1} | Opening ratio of straight tube shape ρₛ | Ratio of opening ratio ρ_{c1}/ρₛ |
|---|---|---|---|
| 10 | 6.44% | 16.63% | 0.39 |
| 15 | 3.72% | 7.62% | 0.49 |
| 20 | 2.20% | 4.25% | 0.52 |
| 25 | 1.71% | 2.70% | 0.63 |
| 30 | 1.28% | 1.83% | 0.7 |
| 35 | 0.99% | 1.34% | 0.74 |
| 40 | 0.80% | 0.99% | 0.81 |
| 45 | 0.65% | 0.81% | 0.81 |
| 50 | 0.55% | 0.63% | 0.87 |
| 55 | 0.48% | 0.55% | 0.86 |
| 60 | 0.44% | 0.47% | 0.94 |
| 65 | 0.40% | 0.44% | 0.91 |
| 70 | 0.37% | 0.39% | 0.96 |
| 75 | 0.36% | 0.38% | 0.95 |

It can be seen from Fig. 8 and Table 2 that the smaller the minimum hole diameter φ₁, the smaller the optimum opening ratio ρ_{c1} in the case of the shape having the same hole diameters with respect to the optimum opening ratio ρₛ in the case of a straight tube shape. In a case of a small hole diameter of which the opening ratio increases, an effect of reducing the opening ratio can be easily obtained by forming the shape having the same hole diameters.

In a case where an approximate expression of the relationship between the ratio p_{c1}/ρₛ of the optimum opening ratio and the minimum hole diameter φ₁ is obtained from Fig. 8, the approximate expression is ρ_{c1}/ρₛ = 0.30 × ln(φ₁) - 0.34.

Therefore, in the case of the shape of the through-hole with the shape having the same hole diameters, it is preferable that assuming that in a case where the minimum hole diameter φ₁ (µm) of the through-hole A and the maximum hole diameter φ₂ are in a range of 2 ≤ φ₂/φ₁ ≤ 5, the average opening ratio of the through-holes is ρ_{c}; assuming that in a case where a hole diameter is the minimum hole diameter φ₁ and has the straight tube shape, the optimum opening ratio is ρₛ, the optimum opening ratio ρₛ is ρₛ = 18.7 × φ₁^{-2.04}; and the average opening ratio ρ_{c} of the through-holes satisfies ρ_{c}/ρₛ = 0.30 × ln(φ₁) - C and 2.0 ≤ C ≤ 0.48.

Next, regarding a case of the shape of the through-hole with the shape having different hole diameters as shown in Fig. 3, a simulation was performed such that the magnification ratio φ₂/φ₁ is set to 5 times and the minimum hole diameter φ₁ is variously changed with respect to the hole diameter φ₃ on any other main surfaces.

The hole diameter φ₃ on the other main surface is determined by φ₃ = ((φ₂/φ₁ - 1) × h + 1) × φ₁, and the ratio ρ_{c1}/ρₛ of the optimum opening ratio was obtained by performing the simulation with respect to cases of h = 0.1, 0.2, 0.4, and 0.8, respectively.

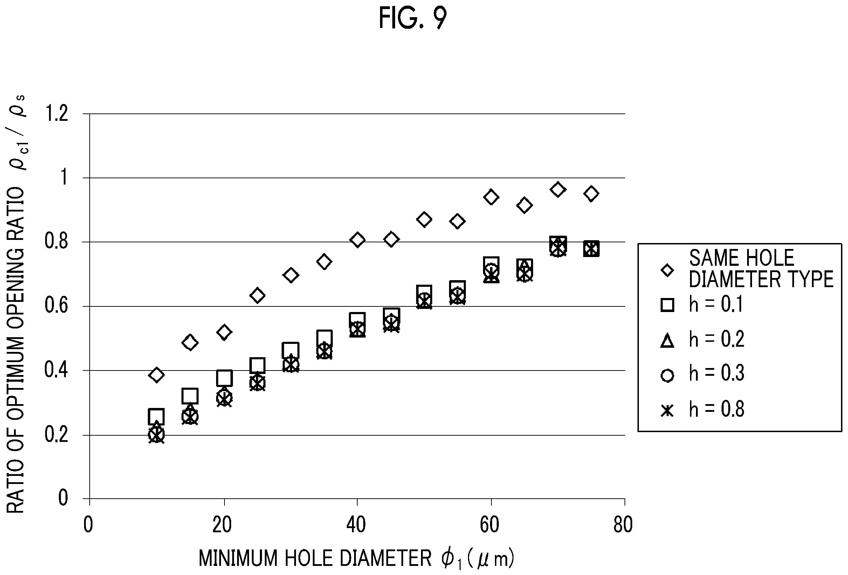

The results are shown in Fig. 9.

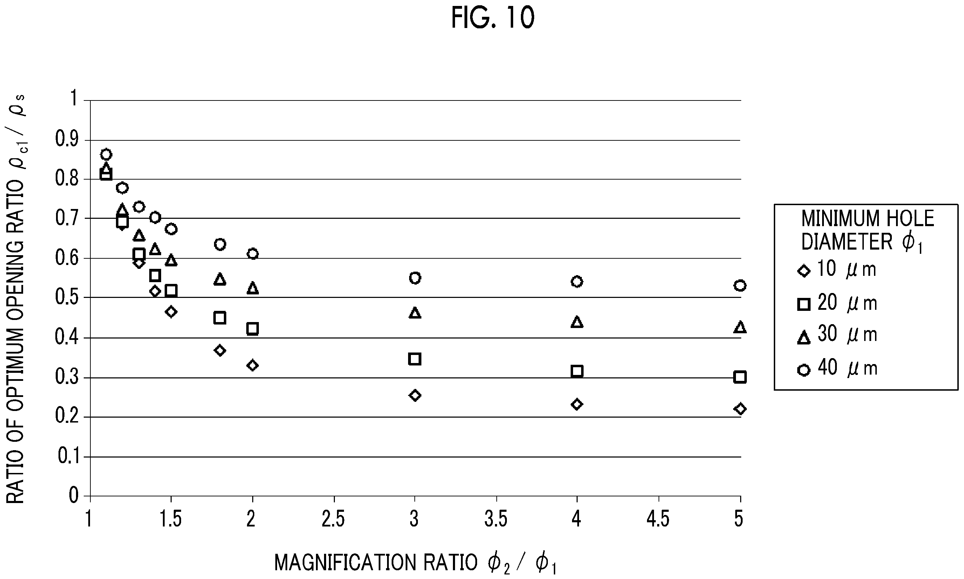

In addition, assuming that the hole diameter φ₃ on the other main surface is the case of h = 0.2, the absorbance was calculated by variously changing a value of the maximum hole diameter φ₂ with respect to respective cases were the minimum hole diameter φ₁ is 10 µm, 20 µm, 30 µm, and 40 µm, and the optimum opening ratio ρ_{c1} having the maximized absorbance was obtained. The relationship between the ratio φ₂/φ₁ of the maximum hole diameter φ₂ to the minimum hole diameter φ₁ and a ratio ρ_{c1}/ρₛ of the optimum opening ratio ρ_{c1} to the optimum opening ratio ρₛ in the case of a straight tube shape is shown Fig. 10.

It can be seen from Fig. 9 that in a case of the shape of the through-hole having different hole diameters, the optimum opening ratio ρ_{c1} can be smaller than the case of the shape having the same hole diameters. It is considered that this is because the shape is approximate to a shape of a through-hole having a larger straight tube shape than the through-hole with the shape having the same hole diameters.

Furthermore, it can be seen from Fig. 9 that in a case where the maximum hole diameter φ₂ is large (magnification ratio of 5 times), the optimum opening ratio ρ_{c1} hardly has an effect on a value of the hole diameter φ₃. That is, it can be seen that the optimum opening ratio ρ_{c1} can be determined regardless of the value of the hole diameter φ₃ with respect to the general shape having different hole diameters.

Therefore, it can be seen from Fig. 10 that in the case of the shape having different hole diameters, the ratio ρ_{c1}/ρₛ of the optimum opening ratio ρ_{c1} to the optimum opening ratio ρₛ in the case of a straight tube shape decreases as the magnification ratio φ₂/φ₁ increases in the range where the magnification ratio φ₂/φ₁ is small (the range of 1 < φ₂/φ₁ < 2). That is, it can be seen that the larger the magnification ratio φ₂/φ₁, the smaller the optimum opening ratio ρ_{c1} in the case of the shape having different hole diameters than the optimum opening ratio ρₛ in the case of a straight tube shape.

In addition, it can be seen that in a range where the magnification ratio φ₂/φ₁ is large (a range of 2 ≤ φ₂/φ₁ ≤ 5), the ratio ρ_{c1}/ρₛ is substantially constant at each minimum hole diameter φ₁. That is, it can be seen that the optimum opening ratio ρ_{c1} in the case of the shape having different hole diameters converges to a certain value in a range where the magnification ratio φ₂/φ₁ is more than twice as large.

In a case where an approximate expression of the relationship between the ratio ρ_{c1}/ρₛ of the optimum opening ratio and the minimum hole diameter φ₁ is obtained from Fig. 9, the approximate expression is ρ_{c1}/ρₛ = 0.30 × ln(φ₁) - 0.58.

Therefore, in the case of the shape of the through-hole having different hole diameters, it is preferable that assuming that in a case where the minimum hole diameter φ₁ (µm) of the through-hole A and the maximum hole diameter φ₂ are in a range of 2 ≤ φ₂/φ₁ ≤ 5, the average opening ratio of the through-holes is ρ_{c}; assuming that in a case where a hole diameter is the minimum hole diameter φ₁ and has the straight tube shape, the optimum opening ratio is ρₛ, the optimum opening ratio ρₛ is ρₛ = 18.7 × φ₁^{-2.04}; and the average opening ratio ρ_{c} of the through-holes satisfies ρ_{c}/ρₛ = 0.30 × ln(φ₁) - C and 0.46 ≤ C ≤ 0.70.

Here, the through-hole A may include both of the shape having the same hole diameters and the shape having different hole diameters. Therefore, it is preferable that assuming that in a case where the minimum hole diameter φ₁ (µm) of the through-hole A and the maximum hole diameter φ₂ are in a range of 2 ≤ φ₂/φ₁ ≤ 5, the average opening ratio of the through-holes is ρ_{c}; assuming that in a case where a hole diameter is the minimum hole diameter φ₁ and has the straight tube shape, the optimum opening ratio is ρₛ, the optimum opening ratio ρₛ is ρₛ = 18.7 × φ₁^{-2.04.} and the average opening ratio ρ_{c} of the through-holes satisfies ρ_{c}/ρₛ = 0.30 × ln(φ₁) - C and 0.20 ≤ C ≤ 0.70. In addition, the constant C preferably satisfies 0.25 ≤ C ≤ 0.65, and more preferably satisfies 0.30 ≤ C ≤ 0.60.

Furthermore, in the through-holes A, in a case where the number of shapes having the same hole diameters is larger than the number of shapes having different hole diameters, it is preferable to satisfy 0.20 ≤ C ≤ 0.48, and in a case where the number of shapes having different hole diameters is larger than the number of shapes having the same hole diameters, it is preferable to satisfy 0.46 ≤ C ≤ 0.70.

It can be seen from Figs. 7 and 10 that even in a case where the through-holes A have the shape having the same hole diameters and the shape having different hole diameters, it is preferable that the average opening ratio ρ_{c} is smaller than the optimum opening ratio ρₛ of which the through-holes have the minimum hole diameter φ₁ and the straight tube shape and is in a range larger than the opening ratio ρ_{c}/ρₛ × (0.30 × ln(φ₁) - C) in a case of the range of 2 < φ₂/φ₁ ≤ 5, in a case where the magnification ratio φ₂/φ₁ of the maximum hole diameter φ₂ to the minimum hole diameter φ₁ is in the range of 1 < φ₂/φ₁ < 2. That is, it is preferable that ρₛ × (0.30 × ln(φ₁) - C) < ρ_{c} < ρₛ is satisfied.

It is preferable that the magnification ratio φ₂/φ₁ of the maximum hole diameter φ₂ to the minimum hole diameter φ₁ is large from the viewpoint of keeping the optimum opening ratio to be small and leaving the original material on the surface as it is. However, from the viewpoint of internal strength of the microperforated sheet, it is preferable that the magnification ratio φ₂/φ₁ is small. Accordingly, the magnification ratio φ₂/φ₁ is preferably 1.1 times to 3 times, and more preferably 1.3 times to 2 times.

In a case where the microperforated sheet is an opaque sheet (a metal sheet is included), the average opening diameter of the through-hole is observed such white light is projected to one surface of the microperforated sheet, and observation is performed on the other surface side by using an optical microscope (manufactured by Hamamatsu Photonics K.K.). In an observed photograph, 20 through-holes whose periphery is continuous in a ring shape are extracted, opening diameters thereof are read, and an average value of the opening diameters is calculated as the average opening diameter. In a case where there are less than 20 through-holes in one photograph, photographs are taken at different positions in the surrounding area and counted until the total number reaches 20. By performing measurement in this manner, an area through which light is transmitted corresponds to a minimum hole diameter portion of the through-hole, so that the minimum hole diameter of each through-hole diameter can be measured. In the present invention, the average opening diameter in the observation of the opening ratio and the surface is based on the minimum hole diameter.

On the other hand, in a case where the microperforated sheet is a transparent sheet, 20 holes are determined, and the minimum hole diameter can be measured based on a size of an edge of each hole in the above manner. From this, the average opening diameter (minimum hole diameter) is obtained.

The opening diameter is evaluated using a diameter (circle equivalent diameter) obtained by measuring each area of the through-hole portion and replacing the measured area with a circle having the same area. That is, since the shape of the opening portion of the through-hole is not limited to the approximately circular shape, in a case where the shape of the opening portion is a non-circular shape, an evaluation is performed on a diameter of a circle having the same area as the non-circular shape. Therefore, for example, even in a case of through-holes having such a shape that two or more through-holes are integrated, the through-holes are regarded as one through-hole, and the circle equivalent diameter of the through-hole is used as the opening diameter.

For these tasks, for example, all circle equivalent diameters, opening ratios, and the like can be calculated by Analyze Particles using "Image J" (https://imagej.nih.gov/ij/).

In addition, the shape of the through-hole is a shape seen in a cross-section in a direction in which in a case of measuring the above opening diameter, the opening diameter is measured as the maximum value. The maximum hole diameter φ₂, the minimum hole diameter φ₁, and the hole diameter φ₃ on the other surface may be measured in such a manner that the through-hole is cut with a microtome to form a cross-section, the cross-section is captured at a magnification ratio of 800 times using a high-resolution scanning electron microscope (SEM), ten through-holes A having the internal maximum hole diameter are extracted, and the maximum hole diameter φ₂, the minimum hole diameter φ₁, and the hole diameter φ₃ on the other surface is measured.

Furthermore, the average opening ratio ρ_{c} is obtained from the opening ratio based on the minimum hole diameter portion using the observed photograph of light transmitted by the optical microscope. Regarding the obtained field of view (30 mm × 30 mm) (five places), the photograph is binarized by image analysis software or the like, through-hole portion and the non-through-hole portion are observed, a ratio (opening area/geometric area) of the sum of the opening areas of the through-holes to the area of the field of view (geometric area) is calculated, and an average value in each field of view (five places) is calculated as the average opening ratio ρ_{c}.

In addition, the ratio of the number of through-holes A having the above shape with respect to all the through-holes is not particularly limited, but is preferably 30% or more, more preferably 50% or more, and even more preferably 70% or more from the viewpoint of sound absorption characteristics, appearance, touch feeling, and the like.

Furthermore, regarding the ratio of the through-holes A, the same measurement as measurement of the average opening diameter and measurement of the through-hole shape is performed to calculate the ratio of the number of through-holes A with respect to all the through-holes in a range of 5 mm x 5 mm and ten places.

Although the thickness of the microperforated sheet is not limited, the friction energy received in a case where the sound passes through the through-hole increases as the thickness increases. Therefore, it can be considered that sound absorbing performance is further improved. In addition, in a case where the microperforated sheet is extremely thin, it is difficult to handle the microperforated sheet and the microperforated sheet is easy to break. For this reason, it is preferable to have a thickness enough to hold the microperforated sheet. On the other hand, in terms of miniaturization and air permeability, it is preferable that the thickness is small. In a case where etching or the like is used for a method of forming the through-hole, a longer manufacturing time is required as the thickness becomes larger. Therefore, from the viewpoint of productivity, it is preferable that the thickness is small. In a case where the thickness is too large, the local speed of the sound is reduced in a case where the sound passes through the thick through-hole. Accordingly, since the speed of the sound passing through the sound absorbing body is reduced, there is a possibility that the sound absorption effect obtained from the sound absorbing body will be reduced.

From the viewpoints of sound absorbing performance, miniaturization, air permeability, productivity and the like, the thickness of the microperforated sheet is preferably 5 µm to 500 µm, more preferably 7 µm to 300 µm, even more preferably 10 µm to 100 µm, and particularly preferably 15 µm to 50 µm.

There is no limitation on the material of the microperforated sheet, and various metals, such as aluminum, titanium, nickel, permalloy, 42 alloy, kovar, nichrome, copper, beryllium, phosphor bronze, brass, nickel silver, tin, zinc, iron, tantalum, niobium, molybdenum, zirconium, gold, silver, platinum, palladium, steel, tungsten, lead, and iridium; alloy materials of these metals; resin materials, such as polyethylene terephthalate (PET), triacetyl cellulose (TAC), polyvinylidene chloride, polyethylene, polyvinyl chloride, polymethyl bentene, cycloolefin polymer (COP), polycarbonate, Zeonor, polyethylene naphthalate (PEN), polypropylene, polyimide, ABS resin (acrylonitrile, butadiene, styrene copolymer synthetic resin), and PLA resin (polylactic acid); and the like can be used. In addition, glass materials such as thin film glass, and fiber reinforced plastic materials such as carbon fiber reinforced plastics (CFRP) and glass fiber reinforced plastics (GFRP) can also be used.

It is preferable to use a metal material from the viewpoints that film vibration does not easily occur even though the Young's modulus is high and the thickness is small and accordingly the effect of sound absorption by friction in the micro through-holes is easily obtained. Among these, copper, nickel, stainless steel, titanium, and aluminum are preferable from the viewpoints of cost and availability. In particular, aluminum and an aluminum alloy, which are lightweight and are easy to form micro through-holes by etching or the like, are preferably used from the viewpoints of availability, cost, and the like.

In the case of using a metal material, metal plating may be performed on the surface from the viewpoint of suppression of rust and the like.

In addition, by performing the metal plating on at least the inner surface of the through-hole, the average opening diameter of the through-holes may be adjusted to a smaller range.

By using a material that is conductive and is not charged, such as a metal material, as the material of the microperforated sheet, fine dirt, dust, and the like are not attracted to the film by static electricity. Therefore, it is possible to suppress the sound absorbing performance from lowering due to clogging of the through-hole of the microperforated sheet with dirt, dust, and the like.

In addition, heat resistance can be improved by using a metal material as the material of the microperforated sheet. In addition, ozone resistance can be improved.

In a case where a metal material is used as the microperforated sheet, it is possible to shield electric waves.

The metal material has a high reflectance with respect to radiant heat due to far infrared rays. Accordingly, in a case where the metal material (conductive material) is used as a material of the microperforated sheet, the metal material also functions as a heat insulating material for preventing heat transfer due to radiant heat. In this case, the plurality of through-holes are formed on the microperforated sheet, but the microperforated sheet functions as a reflecting film since the minimum hole diameter of the through-hole is small.

It is known that a structure in which a plurality of micro through-holes are opened in a metal functions as a high pass filter of a frequency. For example, a window with a metal mesh in a microwave oven has a property of transmitting visible high-frequency light while shielding microwaves used for the microwave oven. In this case, assuming that the hole diameter of the through-hole is φ and the wavelength of the electromagnetic wave is λ, the window functions as a filter that does not transmit a long wavelength component satisfying the relationship of φ < λ and transmits a short wavelength component satisfying the relationship of φ > λ.

Here, the response to radiant heat is considered. Radiant heat is a heat transfer mechanism in which far infrared rays are radiated from an object according to the object temperature and transmitted to other objects. From the Wien's radiation law, it is known that radiant heat in an environment of about room temperature is distributed around λ = 10 µm and up to three times the wavelength (up to 30 µm) on the longer wavelength side contributes effectively to transferring heat by radiation. Considering the relationship between the hole diameter φ of the high pass filter and the wavelength λ, the component of λ > 20 µm is strongly shielded in the case of φ = 20 µm, while the relationship of φ > λ is satisfied and radiant heat propagates through the through-hole in the case of φ = 50 µm. That is, since the hole diameter φ is several tens of micrometers, the propagation performance of radiant heat greatly changes depending on the difference in hole diameter φ, and it can be seen that the smaller the hole diameter φ, that is, the smaller the average opening diameter, the more it functions as a radiant heat cut filter. Therefore, from the viewpoint of a heat insulating material for preventing heat transfer due to radiant heat, the average opening diameter of the through-holes formed on the microperforated sheet is preferably 20 µm or less.

On the other hand, in a case where transparency is required for the microperforated sheet, a resin material or a glass material capable of imparting transparency can be used. For example, a PET film has a relatively high Young's modulus among resin materials, is easily available, and has high transparency. Therefore, the PET film can be used as a microperforated sheet suitable for forming through-holes.

It is possible to improve the durability of the microperforated sheet by appropriately performing surface treatment (plating treatment, oxide coating treatment, surface coating (fluorine, ceramic), and the like) according to the material of the microperforated sheet. For example, in a case where aluminum is used as a material of the microperforated sheet, it is possible to form an oxide coating film on the surface by performing alumite treatment (anodic oxidation treatment) or boehmite treatment. By forming an oxide coating film on the surface, it is possible to improve corrosion resistance, abrasion resistance, scratch resistance, and the like. In addition, by adjusting the treatment time to adjust the thickness of the oxide coating film, it is possible to adjust a tint by optical interference.

Coloring, decoration, designing, and the like can be applied to the microperforated sheet. As a method of applying these, an appropriate method may be selected according to the material of the microperforated sheet and the state of the surface treatment. For example, printing using an ink jet method or the like can be used. In addition, in a case where aluminum is used as a material of the microperforated sheet, highly durable coloring can be performed by performing color alumite treatment. The color alumite treatment is a treatment in which alumite treatment is performed on the surface and then a dye is permeated onto the surface and then the surface is sealed. In this manner, it is possible to obtain a microperforated sheet with high designability such as the presence or absence of metallic luster and color. In addition, by forming alumite treatment after forming through-holes, an anodic oxide coating film is formed only in the aluminum portion. Therefore, decorations can be made without the dye covering the through-holes and reducing the sound absorption characteristics.

In combination with the alumite treatment, various coloring and design can be applied.

Here, in the soundproof structure according to the embodiment of the present invention, the plurality of through-holes of the microperforated sheet may be regularly arranged, or may be randomly arranged. From the viewpoints of productivity of micro through-holes, robustness of sound absorption characteristics, suppression of sound diffraction, and the like, it is preferable that the through-holes are randomly arranged. Regarding sound diffraction, in a case where the through-holes are periodically arranged, a diffraction phenomenon of sound occurs according to the period of the through-hole. Accordingly, there is a concern that the sound is bent by diffraction and the traveling direction of noise is divided into a plurality of directions. Random is a disposition state in which there is no periodicity like a complete arrangement, and the absorption effect by each through-hole appears but the sound diffraction phenomenon due to the minimum distance between through-holes does not occur.

In a case of manufacturing the microperforated sheet having the plurality of the through-hole, for mass production, it is easier to form a random pattern at once using surface treatment or the like rather than a process for manufacturing a periodic arrangement. Accordingly, from the viewpoint of productivity, it is preferable that the through-holes are randomly arranged.

Also from the viewpoint of the visibility of through-holes resulting from the arrangement, it is preferable that the through-holes be randomly arranged. In a case where the through-holes are regularly arranged, a light diffraction phenomenon may occur according to the arrangement period of the through-holes, so that the light may appear to be rainbow-colored.

In particular, in a case where the average opening diameter of the through-holes is set to a small opening diameter of less than 100 µm, the average opening ratio needs to be increased to some extent from the viewpoint of sound absorbing performance. Therefore, since the distance between adjacent through-holes (minimum distance between through-holes) is reduced, the light diffraction phenomenon due to the regular arrangement tends to occur.

On the other hand, by randomly arranging the through-holes, even in a case where the average opening diameter of the through-holes is a small opening diameter of less than 100 µm and high sound absorbing performance is obtained, the light diffraction phenomenon due to the minimum distance between the through-holes can be made less likely to occur.

In the present invention, the fact that the through-holes are randomly arranged is defined as follows.

In the case of the completely periodic structure, strong diffracted light appears. Even in a case where only a small part of the periodic structure is different in position, diffracted light appears due to the remaining structure. Since the diffracted light is a wave formed by superimposing scattered light beams from the basic cell of the periodic structure, interference due to the remaining structure causes the diffracted light even in a case where only a small part is disturbed. This is a mechanism of the diffracted light.

Therefore, as the number of basic cells disturbed from the periodic structure increases, the amount of scattered light that causes interference for making the intensity of diffracted light strong is reduced. As a result, the intensity of diffracted light is reduced.

Accordingly, "random" in the present invention indicates that at least 10% of all the through-holes deviate from the periodic structure. From the above discussion, in order to suppress the diffracted light, the more basic cells deviating from the periodic structure, the more desirable. For this reason, a structure in which 50% of all the through-holes is deviated is preferable, a structure in which 80% of all the through-holes is deviated is more preferable, and a structure in which 90% of all the through-holes is deviated is even more preferable.

As a verification of the deviation, it is possible to take an image in which five or more through-holes are present and analyze the image. As the number of through-holes included becomes higher, it is possible to perform the more accurate analysis. Any image can be used as long as the image is an image that can be recognized by an optical microscope and an SEM and an image in which the positions of a plurality of through-holes can be recognized.

In a captured image, focusing on one through-hole, a distance between the one through-hole and a through-hole therearound is measured. It is assumed that the shortest distance is a1 and the second, third and fourth shortest distances are a2, a3, and a4. In a case where two or more distances of a1 to a4 are the same (for example, the matching distance is assumed to be b1), the through-hole can be determined as a hole having a periodic structure with respect to the distance b1. On the other hand, in a case where neither distances of a1 to a4 are the same, the through-hole can be determined as a through-hole deviating from the periodic structure. This work is performed for all the through-holes on the image to perform determination.

Here, the above "the same" is assumed to be the same up to the deviation of φ assuming that the hole diameter of the through-hole of interest is φ. That is, it is assumed that a2 and a1 are the same in the case of the relationship of a2 - φ < a1 < a2 + φ. It is thought that this is because scattered light from each through-hole is considered for diffracted light and scattering occurs in the range of the hole diameter φ.

Then, for example, the number of "through-holes having a periodic structure with respect to the distance of bl" is counted, and the ratio of the number of the through-holes having a periodic structure with respect to the distance of b1 to the number of all the through-holes on the image is calculated. Assuming that the ratio is c1, the ratio c1 is the ratio of through-holes having a periodic structure, 1 - c1 is the ratio of through-holes deviated from the periodic structure, 1 - c1 is a numerical value that determines the above-described "random". In a case where there are a plurality of distances, for example, "through-holes having a periodic structure with respect to the distance of bl" and "through-holes having a periodic structure with respect to the distance of b2", counting is separately performed for b1 and b2. Assuming that the ratio of the periodic structure with respect to the distance of b1 is c1 and the ratio of the periodic structure with respect to the distance of b2 is c2, the structure in a case where both (1 - c1) and (1 - c2) are 10% or more is "random".

On the other hand, in a case where either (1 - c1) or (1 - c2) is less than 10%, the structure has a periodic structure and is not "random". In this manner, for all of the ratios c1, c2, ..., in a case where the condition of "random" is satisfied, the structure is defined as "random".

A plurality of through-holes may be through-holes having one kind of opening diameter, or may be through-holes having two or more kinds of opening diameters. From the viewpoints of productivity, durability, and the like, it is preferable to form through-holes having two or more kinds of opening diameters.

As for the productivity, as in the above random arrangement, from the viewpoint of performing etching treatment in a large quantity, the productivity is improved by allowing variations in the opening diameter. In addition, from the viewpoint of durability, the size of dirt or dust differs depending on the environment. Accordingly, assuming that through-holes having one kind of opening diameter are provided, all the through-holes are influenced in a case where the size of the main dust almost matches the size of the through-hole. By providing through-holes having a plurality of kinds of opening diameters, a device that can be applied in various environments is obtained.

In addition, from the viewpoint of further increasing the friction in a case where the sound passes through the through-hole, it is preferable that the inner wall surface of the through-hole is roughened. Specifically, the surface roughness Ra of the inner wall surface of the through-hole is preferably 0.1 µm or more, more preferably 0.1 µm to 10.0 µm, and even more preferably 0.2 µm to 1.0 µm.

Here, the surface roughness Ra can be measured by measuring the inside of the through-hole with an atomic force microscope (AFM). As the AFM, for example, SPA 300 manufactured by Hitachi High-Tech Sciences Co., Ltd. can be used. The cantilever can be measured in a dynamic force mode (DFM) using the OMCL-AC200TS. Since the surface roughness of the inner wall surface of the through-hole is about several microns, it is preferable to use the AFM from the viewpoint of having a measurement range and accuracy of several microns.

In addition, it is possible to calculate the average particle diameter of protruding portions by regarding each one of the protruding portions of the unevenness in the through-hole as a particle from the SEM image in the through-hole.

Specifically, an SEM image (field of view of about 1 mm × 1 mm) captured at a magnification ratio of 2000 times is captured into Image J and binarized into black and white so that the protruding portion is white, and the area of each protruding portion is calculated by Analyze Particles. A circle equivalent diameter assuming a circle having the same area as the area of each protruding portion is calculated for each protruding portion, and the average value was calculated as the average particle diameter.

The average particle diameter of the protruding portion is preferably 0.1 µm or more and 10.0 µm or less, and more preferably 0.15 µm or more and 5.0 µm or less.

Here, in a simulation to be described later, the speed in the through-hole was measured. The speed in the through-hole is about 5 × 10⁻² (m/s) in a case where the sound pressure is 1 [Pa] (= 94 dB), and about 1 × 10⁻³ (m/s) in a case where the sound pressure is 60 dB.

In a case where sound having a frequency of 2500 Hz is absorbed, the local speed of a medium through which the sound wave propagates can be known from the local movement speed. From this, the movement distance was obtained on the assumption that particles were vibrating in the penetration direction of the through-hole. Since the sound vibrates, the distance amplitude is a distance by which movement can be made within a half cycle. At 2500 Hz, since one cycle is 1/2500 seconds, half of the time can be in the same direction. The maximum movement distance (sound movement distance) in the sound wave half cycle obtained from the local speed is 10 µm at 94 dB and 0.2 µm at 60 dB. Therefore, since the friction is increased by having the surface roughness of about the sound movement distance, the range of the surface roughness Ra and the range of the average particle diameter of protruding portions described above are preferable.

Here, from the viewpoint of the visibility caused by the size of the through-hole, the average opening diameter of the plurality of through-holes formed on the microperforated sheet is preferably 50 µm or less, and more preferably 20 µm or less.

In a case where the microperforated sheet having micro through-holes, which is used in the soundproof structure according to the embodiment of the present invention, is disposed on the wall surface or a visible place, a situation in which the through-holes themselves are visible is not preferable in terms of design. Since a person is concerned that there are holes as an appearance, it is desirable that through-holes are difficult to see. It becomes a problem in a case where through-holes are visible at various places such as a soundproof wall inside the room, an sound adjusting wall, a soundproof panel, an sound adjusting panel, and an exterior part of a machine.

First, the visibility of one through-hole will be examined.

Hereinafter, a case where the resolution of human eyes is visual acuity 1 will be discussed.

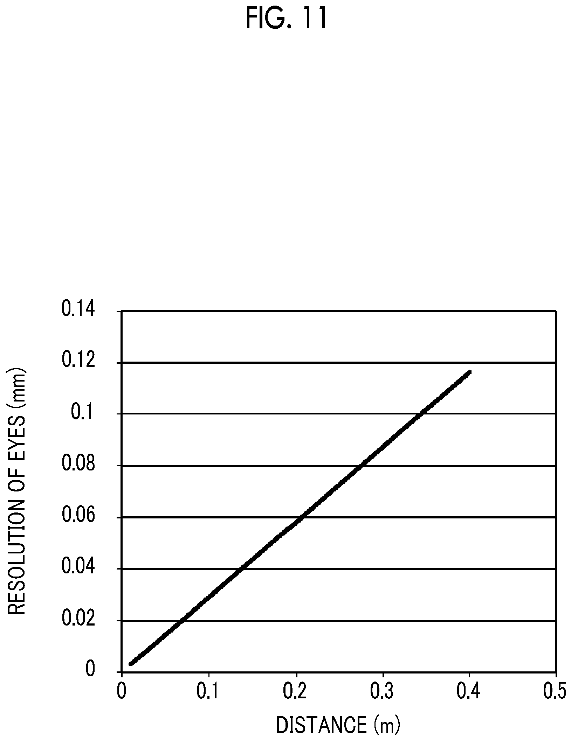

The definition of visual acuity 1 is to see the one minute angle decomposed. This indicates that 87 µm can be decomposed at a distance of 30 cm. The relationship between the distance and the resolution in the case of visual acuity 1 is shown in Fig. 11.

Whether or not the through-hole is visible is strongly relevant to the visual acuity. Whether a blank space between two points and/or two line segments can be seen depends on the resolution, as the visual acuity test is performed by recognizing the gap portion of the Landolt's ring. That is, in the case of a through-hole having an opening diameter less than the resolution of the eye, the distance between the edges of the through-hole cannot be decomposed by the eyes. For this reason, it is difficult to see the through-hole having an opening diameter less than the resolution of the eye. On the other hand, it is possible to recognize the shape of a through-hole having an opening diameter equal to or greater than the resolution of the eye.

In the case of visual acuity 1, a through-hole of 100 µm can be decomposed from a distance of 35 cm. However, a through-hole of 50 µm and a through-hole of 20 µm cannot be decomposed at a distance longer than 18 cm and 7 cm, respectively. Therefore, in a case where a person is concerned since a through-hole of 100 µm can be recognized, a through-hole of 20 µm can be used since the through-hole of 20 µm cannot be recognized unless the distance is not an extremely short distance of 1/5. Therefore, a small opening diameter is advantageous since a through-hole is difficult to be visually recognized. In the case of using the soundproof structure in a wall or in a car, the distance from the observer is generally several tens of centimeters. In this case, an opening diameter of about 100 µm is the boundary therebetween.

Next, light scattering caused by through-holes will be discussed. Since the wavelength of visible light is about 400 nm to 800 nm (0.4 µm to 0.8 µm), the opening diameter of several tens of micrometers discussed in the present invention is sufficiently larger than the optical wavelength. In this case, the cross-sectional area of scattering in visible light (the amount indicating how strongly an object is scattered, the unit is an area) almost matches the geometrical cross-sectional area, that is, the cross-sectional area of the through-hole in this case. That is, it can be seen that the magnitude at which visible light is scattered is proportional to the square of the radius (half of the circle equivalent diameter) of the through-hole. Therefore, as the size of the through-hole increases, the scattering intensity of the light increases with the square of the radius of the through-hole. Since the ease of viewing of a single through-hole is proportional to the amount of scattering of light, visibility in a case where each one of through-holes is large even in a case where the average opening ratio is the same.

In addition, since the microperforated sheet of the soundproof structure according to the embodiment of the present invention is a system in which a plurality of micro through-holes are present, not only the ease of viewing of each through-hole but also the spatial frequency by the arrangement of the through-holes is also strongly related to the visibility. A visual transfer function (VTF) (refer to International Publication WO2014/141867A1, the visual transfer function itself is described in "R. P. Dooley, R. Shaw: Noise Perception in Electrophotography, J. Appl. Photogr. Eng., 5, 4 (1979), pp. 190-196) indicates the ease of viewing according to the arrangement. The visual transfer function is a function indicating how easily detection is made by human vision for each spatial frequency (periodic structure, pitch, and arrangement such as particle arrangement), and the larger the value, the easier the detection.

According to the visual transfer function, it can be seen that the human can most strongly recognize spatial frequencies of several mm⁻¹.

Finally, a difference between a random arrangement having no periodicity for the arrangement of through-holes and a periodic arrangement will be discussed. In the periodic arrangement, a light diffraction phenomenon occurs according to the period. In this case, in a case where transmitted white light, reflected white light, broad spectrum light, and the like hit, the color appears variously (for example, light diffracts and the color appear to be misaligned like a rainbow or the color is strongly reflected at a specific angle). Accordingly, the pattern is noticeable.

On the other hand, in the case of a random arrangement, the above-described diffraction phenomena do not occur.

In the present invention, since the through-hole of the microperforated sheet has a shape having the internal maximum hole diameter, dust larger than the diameter of the through-hole on the main surface does not penetrate into the through-hole. On the other hand, dust smaller than the diameter can penetrate into the through-hole as it is since the internal diameter is large.

Considering a shape in which the inside is narrowed as the opposite shape, compared with a situation in which dust passing through a part of the diameter of the through-hole on the main surface is caught in an inner portion with a small diameter and the dust is left as it is, it can be seen that the shape having a maximum diameter at the inside functions advantageously in suppressing the clogging of dust.

In addition, in a shape in which one surface of the film has a maximum diameter and the inner diameter decreases approximately monotonically, such as a so-called tapered shape, in a case where dust satisfying the relationship of "maximum diameter > dust size > diameter of the other surface" enters from the side having the maximum diameter, a possibility that the internal shape functions as a slope and becomes clogged in the middle is further increased.

As a method of manufacturing the microperforated sheet, a known method may be used depending on a forming material of the microperforated sheet.

For example, in a case of using a metal foil such as an aluminum foil as the microperforated sheet, after a resist material is applied to the surface, lithography is performed on the resist material, and then etching is performed to form the through-holes. Alternatively, a plurality of cylindrical protruding portions are formed on a substrate such as silicon by a photolithographic etching method, the substrate on which the protruding portions are formed is used as a prototype, a metal is electrodeposited on the substrate by electrochemical reaction such as a nickel electroforming method to form a metal foil, the metal foil is peeled off from the substrate, and thereby the microperforated sheet having the through-holes can be formed. By using the manufacturing method disclosed in WO2016/060037A, it is possible to form a through-hole having a maximum diameter at the inside, in which the hole diameter increases inside the through-hole.

In addition, in a case where a resin film such as a PET film is used as the microperforated sheet, the through-hole can be formed by a processing method of absorbing energy such as laser processing or a machining method using physical contact such as punching or needle processing. For example, in a case of laser processing, the through-hole can be processed so as to form a taper shape to which a laser beam shape is reflected depending on an angle of a concentrated high intensity laser beam.

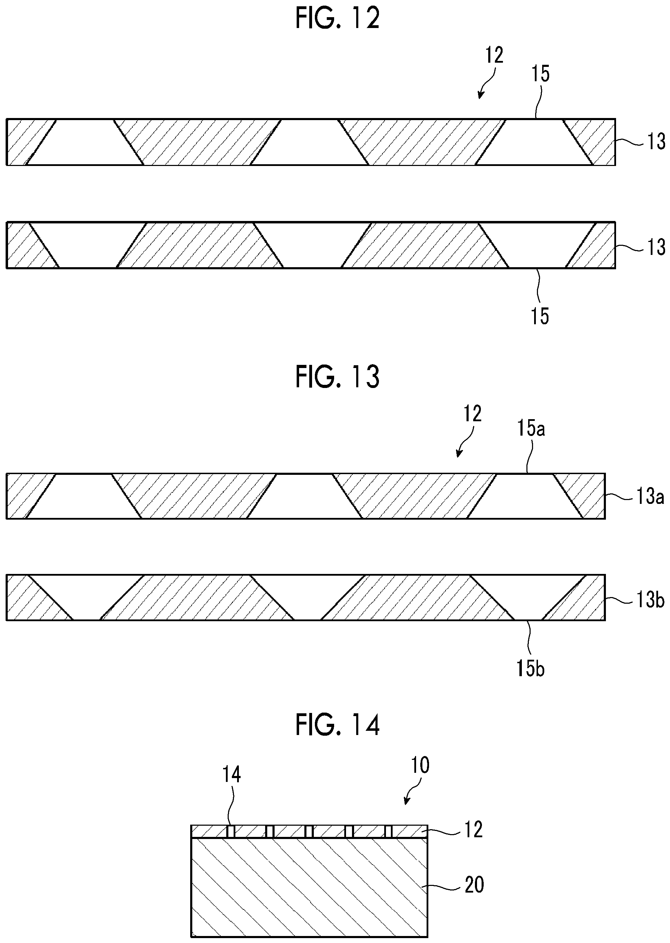

Here, the microperforated sheet is not limited to a configuration in which the through-hole A with the shape having the internal maximum hole diameter is formed on one sheet-shaped member. As in the example shown in Figs. 12 and 13, the microperforated sheet may be formed by bonding two sheet-shaped members.

The microperforated sheet 12 shown in Fig. 12 has a configuration in which two microstructure sheets 13 are laminated. In Fig. 12, for the explanation, the two microstructure sheets 13 are illustrated in a state of being spaced from each other. This point of Fig. 13 is similar to Fig. 12.

The microstructure sheet 13 has a plurality of tapered-holes 15 having a maximum diameter on one surface and a minimum diameter on the other surface.

The two microstructure sheets 13 are laminated so that the surface sides of the tapered-hole 15 having the maximum diameter face each other. Positions of the tapered-holes 15 on each of the two microstructure sheets 13 in a surface direction are aligned to form a through-hole A having an internal maximum hole diameter and a shape having the same hole diameters. That is, a maximum diameter of the tapered-hole 15 formed on the microstructure sheet 13 is the maximum hole diameter φ₂ of the through-hole A, and a minimum diameter of the tapered-hole 15 is the minimum hole diameter φ₁ of the through-hole A.

In an example shown in Fig. 12, the tapered-holes 15 formed on each of the two microstructure sheets 13 has the same shape, but is not limited thereto.

The microperforated sheet 12 shown in Fig. 13 has a configuration in which a microstructure sheet 13a and a microstructure sheet 13b are laminated.

Each of the microstructure sheet 13a and the microstructure sheet 13b has tapered-holes 15a and 15b having a maximum diameter on one surface and a minimum diameter on the other surface. The maximum diameter of the tapered-hole 15b and the maximum diameter of the tapered-hole 15a are substantially the same as each other. The minimum diameter of the tapered-hole 15b is smaller than the minimum diameter of the tapered-hole 15a.

The microstructure sheet 13a and the microstructure sheet 13b are laminated so that the surface sides of the tapered-holes 15a and 15b where each of the tapered-holes 15a and 15b have the maximum diameter face each other. Positions of the tapered-hole 15a and the tapered-hole 15b in the surface direction are aligned to form a through-hole A having an internal maximum hole diameter and a shape having different hole diameters. That is, the maximum diameters of the tapered-hole 15a and the tapered-hole 15b formed on the microstructure sheet 13a and the microstructure sheet 13b correspond to the maximum hole diameter φ₂ of the through-hole A, the minimum diameter of the tapered-hole 15b corresponds to the minimum hole diameter φ₁ of the through-hole A, and the minimum diameter of the tapered-hole 15a is the hole diameter φ₃ of the through-hole A.

The thickness of the two microstructure sheets to be laminated, the shape, the number, the arrangement, and the like of the tapered-hole may be the same or different from each other.

Furthermore, in a case of laminating two microstructure sheets, a tapered-hole of which the position in the surface direction is not aligned with the tapered-hole on the other microstructure sheet may be included. That is, a tapered-hole which does not constitute the through-hole A may be included.

From the viewpoint of easy alignment of the tapered-holes of the two microstructure sheets, the tapered-holes of the two microstructure sheets are preferably formed regularly.

The microstructure sheet having the tapered-hole can be manufactured by the same method as the above-described microperforated sheet.

The two microstructure sheets may be bonded by a method such as an adhesive, thermal fusion welding, surface tension using moisture and the like, fixing an end portion with a tape and the like, and suppressing with a magnet. Furthermore, in a case of using a microstructure sheet having magnetic force, films can be attached to each other.

Here, the soundproof structure according to the embodiment of the present invention may further include a porous sound absorbing body in addition to the microperforated sheet.

Fig. 14 is a cross-sectional view schematically showing an example of a soundproof structure according to the embodiment of the present invention.

The soundproof structure 10 shown in Fig. 14 includes a microperforated sheet 12 and a porous sound absorbing body 20 disposed in contact with one main surface of the microperforated sheet.

In Figs. 14 to 26, for the simplicity, a shape of the through-hole formed on the microperforated sheet is represented by a straight tube shape, but includes the through-hole A having the internal maximum hole diameter.

The porous sound absorbing body 20 is not particularly limited, and conventionally known porous sound absorbing materials can be appropriately used. For example, various known sound absorbing materials including: materials containing a small amount of air and foamed materials, such as foamed urethane, flexible urethane foam, wood, ceramic particle sintered material, and phenol foam; fibers, such as glass wool, rock wool, microfiber (such as Thinslate manufactured by 3M), floor mat, carpet, meltblown nonwoven fabric, metal nonwoven fabric, polyester nonwoven fabric, metal wool, felt, insulation board, and glass nonwoven fabric, and nonwoven fabric materials; wood cement board; nanofiber-based materials such as silica nanofiber; and gypsum board can be used.

There is no limitation on the thickness of the porous sound absorbing body 20. From the viewpoints of sound absorbing performance and the like, the thickness of the porous sound absorbing body 20 is preferably 3 mm to 100 mm, more preferably 5 mm to 50 mm, and even more preferably 10 mm to 30 mm.

The mechanism of sound absorption by the porous sound absorbing body is that, in a case where the sound propagates through pores in the porous sound absorbing body, the energy of the sound is attenuated by viscous attenuation or heat conduction. This attenuation resistance is proportional to the particle speed of the sound.

Here, according to the study of the present inventors, in a case where the microperforated sheet having through-holes and the porous sound absorbing body are combined, the local speed extremely increases at the time of passing through the through-hole. Due to this effect, the speed of sound passing through the porous sound absorbing body is also increased in part. As a result, it was found that the effect of sound absorption by the sound absorbing body was improved by combining the porous sound absorbing body with the microperforated sheet.

By disposing the porous sound absorbing body 20 in contact with the microperforated sheet 12, there is an effect of preventing the microperforated sheet having through-holes from being damaged.

Many porous sound absorbing bodies, such as urethane foam and glass wool, are likely to generate dust over time due to the structure containing a large amount of air thereinside. By disposing the microperforated sheet on the porous sound absorbing body as shown in Fig. 14, there is also an effect that the amount of dust from the porous sound absorbing body can be suppressed.

The arrangement method of the microperforated sheet 12 and the porous sound absorbing body 20 is not particularly limited, and the microperforated sheet 12 may be placed on the porous sound absorbing body 20 or the microperforated sheet 12 may be fixed to the porous sound absorbing body 20. As the fixing method of the microperforated sheet 12 and the porous sound absorbing body 20, a number of methods such as bonding the microperforated sheet 12 to the porous sound absorbing body 20 by an adhesive (such as spray glue manufactured by 3M Co.), attaching parts of the microperforated sheet 12 and the porous sound absorbing body 20 by an gluing agent such as a double-sided tape, and mechanically tying the microperforated sheet 12 and the porous sound absorbing body 20 up by a stapler can be used.

In this case, it is not necessary that the entire surface of the microperforated sheet and the entire surface of the porous sound absorbing body are bonded to each other, and parts thereof may be in contact with each other. Furthermore, the porous sound absorbing body and the microperforated sheet may be in contact with each other via a member such as a mesh (metal mesh, plastic mesh, and the like), a frame, and a ventilation film, which allows sound to pass. In a case where the porous sound absorbing body is within a range affected by a large change in the particle speed, which is an effect of the microperforated sheet, the change of the sound absorption characteristics can be generated even in the spaced portion.

In a configuration having a wall member to be described later, for example, the porous sound absorbing body may be installed in the wall member, and the microperforated sheet may be simply placed on or in contact with the surface of the porous sound absorbing body.

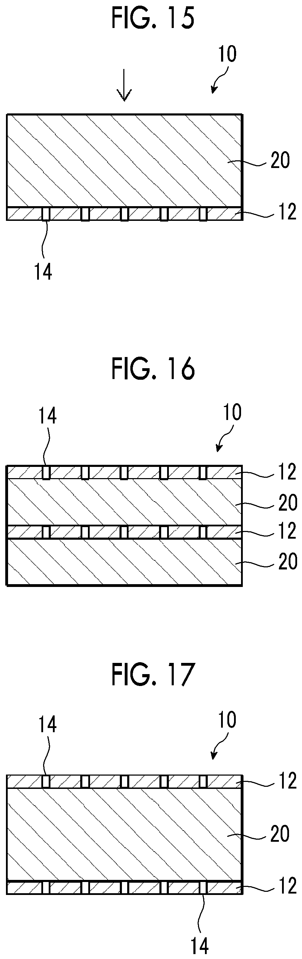

Here, the direction of the soundproof structure 10 with respect to the noise source to be soundproofed is not particularly limited, and the microperforated sheet 12 side may be a noise source side, or the porous sound absorbing body 20 side may be a noise source side as in the example shown in Fig. 15. The arrow in Fig. 15 indicates an incidence direction of sound, and the noise source is located on the upper side in the diagram.

As for the direction of the noise source, for example, in a case where the noise source is clear such as a speaker or machine noise, the direction of the noise source can be determined as an incidence direction. In addition, as a method of quantitatively determining the "incidence direction of sound", the direction of the sound source can be determined by measuring the phase information of the sound pressure or the particle speed simultaneously with the amplitude information of the sound pressure using a microphone array, beam forming, or a PU probe.

By using Ono Sokki's three-dimensional intensity probe MI-6420, Microflown's PU probe (sound pressure-particle speed probe), Breuer & Keller microphone array system, and the like, not only the strength of the sound pressure but also the position can be determined. In a wide free space with enough space, it is desirable to determine the noise source for each frequency from the entire space using a microphone array system. In a case where the area is limited such as in a duct, the noise source can be determined by a small intensity probe or a PU probe.

Here, although one microperforated sheet 12 and one porous sound absorbing body 20 are provided in the example shown in Fig. 14, two or more microperforated sheets 12 and/or two or more porous sound absorbing bodies 20 may be provided.

For example, as in an example shown in Fig. 16, two or more porous sound absorbing bodies 20 and two or more microperforated sheets 12 may be alternately laminated. Alternatively, as in the example shown Fig. 17, the microperforated sheet 12 may be disposed on each of both sides of the porous sound absorbing body 20. Alternatively, the porous sound absorbing body 20 may be disposed on each of both sides of the microperforated sheet 12.

It is preferable in that the microperforated sheet can be prevented from being broken or damaged by making the microperforated sheet interposed between the sound absorbing bodies.

The soundproof structure according to the embodiment of the present invention may have a wall member on a surface of the porous sound absorbing body on the opposite side to the microperforated sheet.

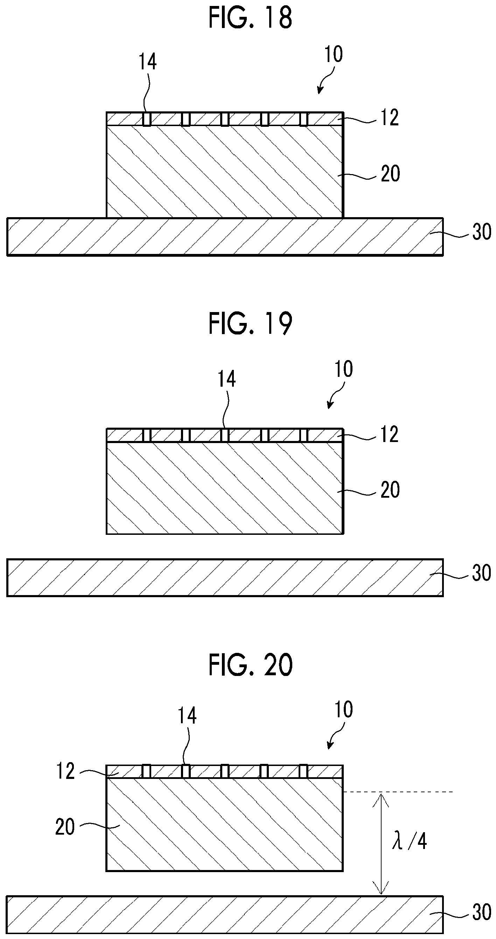

In an example shown in Fig. 18, the soundproof structure 10 has the microperforated sheet 12, the porous sound absorbing body 20, and the wall member 30 in this order. The porous sound absorbing body 20 and the wall member 30 are disposed in contact with each other.

In an example shown in Fig. 19, the soundproof structure 10 has the microperforated sheet 12, the porous sound absorbing body 20, and the wall member 30 in this order. The porous sound absorbing body 20 and the wall member 30 are disposed to be spaced from each other by a predetermined distance.

The wall member 30 is a plate-shaped member that can be substantially regarded as a rigid body.

The wall member 30 is not limited, but the wall, floor, and ceiling of a building, a sheet metal or floor of a transportation machine such as a car, a plate of general furniture such as a desk, a soundproof wall, a road, a plate such as a partition, the surface of home appliances, the surface of office equipment, an internal duct, an industrial machine surface, a metal plate, and the like can be mentioned. Since the acoustic impedance of air and the acoustic impedance of solids are greatly different for most materials, the surface reflection is very large regardless of the material, such as metal, plastic, and wood. Therefore, wall members formed of these materials can be substantially regarded as rigid bodies.

As described above, since the wall member 30 is provided, the sound transmitted through the microperforated sheet 12 and the porous sound absorbing body 20 is totally reflected by the wall member 30 and is incident on the porous sound absorbing body 20 and the microperforated sheet 12 again. Therefore, the sound absorbing performance can be further improved.

From the viewpoint of sound absorbing performance, it is preferable that the porous sound absorbing body 20 and the wall member 30 are in contact with each other. That is, it is preferable that the space between the microperforated sheet 12 and the wall member 30 is filled with the porous sound absorbing body 20. In addition, the porous sound absorbing body 20 and the wall member 30 may be partially in contact with each other.

In the case of a configuration having the wall member 30, the distance between the microperforated sheet 12 and the wall member 30 is preferably less than 35 cm.

In the case of the configuration having the wall member 30, the sound pressure is maximized at the position of the wall member. Therefore, the particle speed is the minimum and the sound pressure is the maximum at a position spaced apart from there by a half wavelength λ/2. As described above, the microperforated sheet absorbs the energy of the sound passing through the formed through-hole instead of the frictional heat. For this reason, at a position where the microperforated sheet is disposed, the absorption of sound having a frequency at which the particle speed decreases is reduced. That is, the absorption of sound having a frequency at which the distance between the microperforated sheet and the wall member is λ/2 + n × λ/2 (n is an integer of 0 or more) is reduced. For example, assuming that the distance between the microperforated sheet and the wall member is 34.3 cm, since this matches λ/2 + n × λ/2 for the wavelength of the sound having frequencies of 500 Hz, 1000 Hz, 1500 Hz, 2000 Hz, .., the absorption of sound having these frequencies is reduced. Therefore, by setting the distance between the microperforated sheet and the wall member to less than 35 cm, a reduction in the absorption of sound having a frequency smaller than 500 Hz can be suppressed.

From the viewpoint of increasing the absorption of sound in the audible range, the smaller the distance between the microperforated sheet and the wall member, the better. The distance between the microperforated sheet and the wall member is preferably 17.1 cm (corresponding to 1000 Hz) or less, more preferably 8.5 cm (corresponding to 2000 Hz) or less, even more preferably 6.9 cm (corresponding to 2500 Hz) or less, particularly preferably 1.7 cm (corresponding to 10000 Hz) or less, and most preferably 0.85 cm (corresponding to 20000 Hz) or less.

In the case of the configuration having the wall member 30, the particle speed is maximized at a position spaced apart from the position of the wall member 30 by 1/4 wavelength (λ/4). In a case where the microperforated sheet 12 or the porous sound absorbing body 20 is present at a position where the particle speed is maximized, the absorption of sound having a frequency corresponding to the wavelength is increased. From this point, as shown in Fig. 20, it is preferable that at least one of the microperforated sheet 12 or the porous sound absorbing body 20 is present at a position spaced apart from the position of the wall member 30 by 1/4 wavelength (λ/4) for the wavelength λ of the frequency of the sound to be soundproofed.

In particular, it is preferable that the microperforated sheet 12 is present at a position spaced apart from the position of the wall member 30 by 1/4 wavelength (λ/4). In this manner, the effect of absorption by the through-hole of the microperforated sheet 12 can be increased for the sound having a frequency corresponding to the wavelength.

Also in a case where the wall members 30 is disposed to be spaced from the microperforated sheet 12, it is preferable that at least one of the microperforated sheet 12 or the porous sound absorbing body 20 is present at a position spaced apart from the position of the wall member 30 by 1/4 wavelength (λ/4).

In addition, in the configuration having the wall member 30, the microperforated sheet 12, the porous sound absorbing body 20, and the wall member 30 may be formed as an integrated cell structure.

That is, by adopting a movable shape for a structure in which the wall member 30, the porous sound absorbing body 20, and the microperforated sheet 12 are in contact with each other, the structure can be used as a portable sound absorbing board or sound absorbing cell. Specifically, the structure is a structure in which a porous sound absorbing body is bonded to a plastic or metal plate (wall member) and a microperforated sheet having micro through-holes is attached to the surface of the porous sound absorbing body, and it is possible to form a cell that can be carried by making the plastic or metal plate thin. A plurality of such cells are arranged and attached to a wall or the like to function as a sound absorbing panel or a sound adjusting panel. The sound absorbing panel is intended for sound absorption, and is used, for example, in a conference room or a store to remove noise in order to clarify the sound. In addition, the sound adjusting panel is used to adjust the sound by adjusting the absorption or diffusion of the sound. For example, the sound adjusting panel is used to adjust the sound of a concert hall.

In addition, a cell in which a porous sound absorbing body and a microperforated sheet having micro through-holes are attached to a plastic or metal plate with a smaller size of several centimeters can be used as a soundproof cell that is disposed in a duct, an air supply unit, and the like of various apparatuses to obtain the soundproofing performance. Thus, by also including the wall member in the integrated cell structure, it is possible to obtain the soundproofing performance without caring about the distance between the porous sound absorbing body and the wall member at the time of installation.

At this time, it is preferable that at least one of surfaces not in contact with the wall member, among the surfaces of the porous sound absorbing body, is in contact with the microperforated sheet. That is, it is preferable that the microperforated sheet is in contact with the porous sound absorbing body and is disposed on the surface of the soundproof structure.

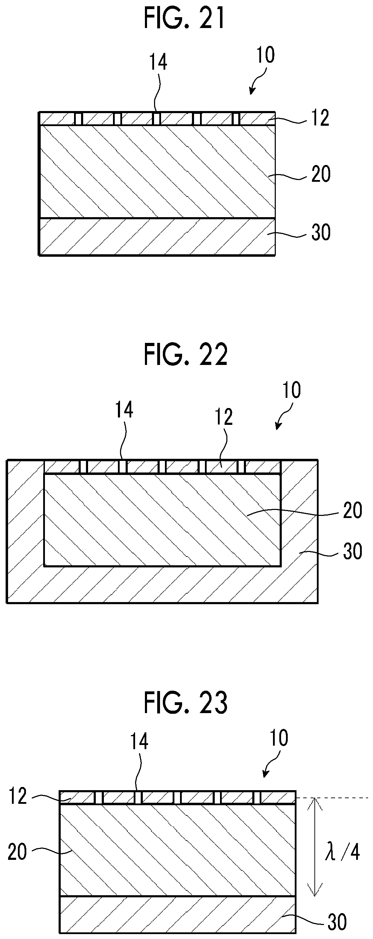

In addition, as shown in Fig. 21, it is preferable that one of the surfaces of the soundproof structure is the microperforated sheet 12 and a surface facing a surface on the microperforated sheet 12 side is the wall member 30.

Alternatively, as in the example shown Fig. 22, all of the surfaces of the soundproof structure may be either the microperforated sheet 12 or the wall member 30. In the example shown in Fig. 22, one of the surfaces of the soundproof structure is the microperforated sheet 12 and the other surface is the wall member 30.

In addition, as shown in Fig. 23, even in a case where the microperforated sheet 12, the porous sound absorbing body 20, and the wall member 30 are formed as a cell structure, it is preferable that the distance between the microperforated sheet 12 and the wall member is a 1/4 wavelength of the frequency of the sound to be soundproofed.

Furthermore, the soundproof structure according to the embodiment of the present invention may have a frame in addition to the microperforated sheet.

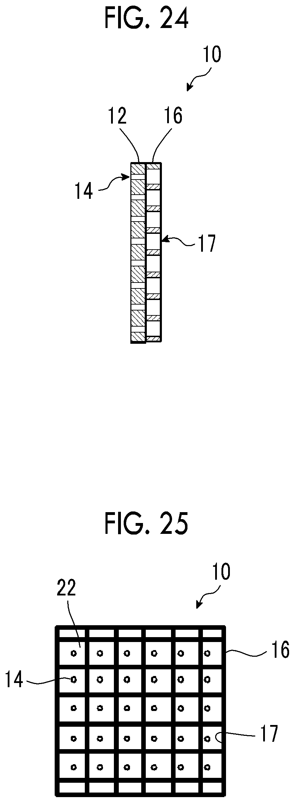

Fig. 24 is a cross-sectional view schematically showing the other example of the soundproof structure according to the embodiment of the present invention, and Fig. 25 is a front view of Fig. 2.

The soundproof structure 10 shown in Figs. 24 and 25 includes the microperforated sheet 12 and a frame 16 disposed in contact with one main surface of the microperforated sheet.

The frame 16 is a member having a plurality of hole portions 17 and is disposed in contact with one surface of the microperforated sheet 12 to support the microperforated sheet 12.

An opening diameter of the hole portion of the frame is larger than the opening diameter of the through-hole of the microperforated sheet. In addition, an opening ratio of the hole portions of a frame is larger than the opening ratio of the through-holes of the microperforated sheet.

Thereby, while the thin microperforated sheet is appropriately supported, it can be prevented from hindering the sound absorption effect caused by the micro through-hole of the microperforated sheet.

In addition, it is preferable that a resonance vibration frequency of the microperforated sheet which is in contact with the frame is larger than an audible range.

A thin microperforated sheet is likely to cause resonance vibration with respect to sound waves. Therefore, there is a problem in that the sound absorption characteristics are reduced in the frequency band around the resonance vibration frequency.

For this reason, a frame having a plurality of hole portions having a large opening diameter is disposed in contact with the microperforated sheet, so that stiffness of the microperforated sheet is increased by the frame. In this case, by setting the opening diameter of the hole portion of the frame to an opening diameter having the resonance vibration frequency of the microperforated sheet higher than a frequency in the audible range, the resonance vibration frequency of the microperforated sheet is higher than the frequency in the audible range. Thereby, in the audible range, it is possible to suppress a decrease in absorbance due to resonance vibration.

According to the study conducted by the present inventors, it is considered that since the microperforated sheet and the through-hole exist, the sound passes through either of the two kinds and is transmitted. The path (route) passing through the microperforated sheet is a path where solid vibration which has been once converted into film vibration of the microperforated sheet is re-radiated as a sound wave, and the path passing through the through-hole is a path directly passing through the through-hole as gas propagation sound. In addition, the path passing through the through-hole is considered to be dominant as the absorption mechanism at this time, but the sound in the frequency band near the resonance vibration frequency of the microperforated sheet (first natural vibration frequency) is mainly considered to pass through the re-radiated path by the film vibration of the microperforated sheet.

On the other hand, apparent stiffness of the microperforated sheet can be increased by disposing the frame in contact with the microperforated sheet, and the resonance vibration frequency can be higher than the frequency in the audible range. Therefore, since the sound in the audible range mainly passes through the path passing through the through-hole rather than the re-radiated path by the film vibration of the microperforated sheet, the sound is absorbed by friction when passing through the through-hole.

The first natural vibration frequency of the microperforated sheet disposed in contact with the frame is a frequency in a natural vibration mode in which sound waves are highly transmitted at a frequency where the film vibration is maximized by sound waves due to the resonance phenomenon. In the present invention, it has been found by the present inventors that since the first natural vibration frequency is determined by a structure formed of the frame and the microperforated sheet, the first natural vibration frequency has substantially the same value regardless of the presence or absence of the through-holes perforated in the microperforated sheet.

Furthermore, since the film vibration increases at a frequency near the first natural vibration frequency, the sound absorption effect due to friction between the sound and the micro through-hole is reduced.

In the present invention, the audible range is 100 Hz to 20000 Hz.

Here, the frame body may be configured to be disposed on one surface of the microperforated sheet or disposed on both surfaces respectively.

By disposing the frame on both surfaces of the microperforated sheet respectively, the stiffness of the microperforated sheet can be further increased, and the resonance vibration frequency can be further increased. Accordingly, the resonance vibration frequency of the microperforated sheet can be easily higher than a frequency in the audible range.

Furthermore, the microperforated sheet may be disposed on one surface of the frame, and the microperforated sheet may be disposed on both surfaces of the frame. Alternatively, the microperforated sheet may be disposed on one surface of the frame, and the wall member may be disposed on the other surface of the frame.

A shape of the opening cross-section of the hole portion of the frame is not particularly limited. For example, the shape of the opening cross-section may be any other shapes including other rectangles such as rectangles, rhombuses, and parallelograms, triangles such as regular triangles, isosceles triangles, and right-angled triangles, polygons including regular-angled polygons such as regular-angled pentagons, and regular-angled hexagons, circles, and ellipses, or may be an indefinite shape. Among these, the shape of the opening cross-section of the hole portion is preferably the regular-angled hexagons, and the frame preferably has a so-called honeycomb structure in which the plurality of hole portions having a regular-angled hexagonal cross-section are arranged in close proximity. By adopting a configuration in which the frame has the honeycomb structure, the apparent stiffness of the microperforated sheet 12 can be further increased, and the resonance vibration frequency can be easily higher than the audible range.

From viewpoints that the stiffness of the microperforated sheet is suitably increased, the opening diameter of the hole portion is larger than the opening diameter of the through-hole of the microperforated sheet, an effect on the path in which the sound passes through the through-hole is reduced, and in terms of handling, a finger or the like is not directly touching the microperforated sheet, the opening diameter of the hole portion of the frame is preferably 22 mm or less, more preferably more than 0.1 mm and 15 mm or less, and particularly preferably 1 mm to 10 mm.

The opening diameter of the hole portion was set to a diameter (circle equivalent diameter) when each area of the hole portion part is measured and replaced with a circle having the same area.

The two frames disposed on both surfaces of the microperforated sheet may have the same configuration or different from each other. For example, the two frames may have the same opening diameter, opening ratio, material, or the like of the hole portion, or may have different opening diameter, opening ratio, material, or the like of the hole portion.

Furthermore, although the microperforated sheet and the frame may be disposed in contact with each other, it is preferable to be adhered and fixed each other.

By adhering and fixing the microperforated sheet and the frame to each other, the stiffness of the microperforated sheet can be further increased, and the resonance vibration frequency can be further increased. Accordingly, the resonance vibration frequency of the microperforated sheet can be easily higher than a frequency in the audible range.

An adhesive used in a case of adhering and fixing the microperforated sheet and the frame to each other may be selected according to materials of the microperforated sheet and the frame. Examples of the adhesive include an epoxy adhesive (Araldite (registered trademark) (manufactured by Nichiban Co., Ltd.)), a cyanoacrylate adhesive (Aron Alpha (registered trademark) (manufactured by Toa Gosei Co., Ltd.)), an acrylic adhesive and the like.

The soundproof structure further includes a second frame having one or more opening portions, and a laminate formed of the microperforated sheet and the frame may be disposed so as to cover the opening portions of the second frame.

An opening diameter of an opening portion of the second frame is larger than the opening diameter of the hole portion of the frame, and an opening ratio of the opening portion of the second frame is larger than the opening ratio of the hole portion of the frame.

In this manner, by including the second frame, the stiffness of the microperforated sheet can be further increased, and the resonance vibration frequency can be further increased. Accordingly, the resonance vibration frequency of the microperforated sheet can be easily higher than a frequency in the audible range.

In the example shown in Fig. 1, one microperforated sheet 12 on which the plurality of through-hole 14 are formed is the soundproof structure 10, but the soundproof structure 10 is not limited thereto and two or more microperforated sheets on which the plurality of through-hole are formed are arranged in the thickness direction. That is, two or more soundproof structures 10 according to the embodiment of the present invention may be arranged in the thickness direction to form a soundproof structure.

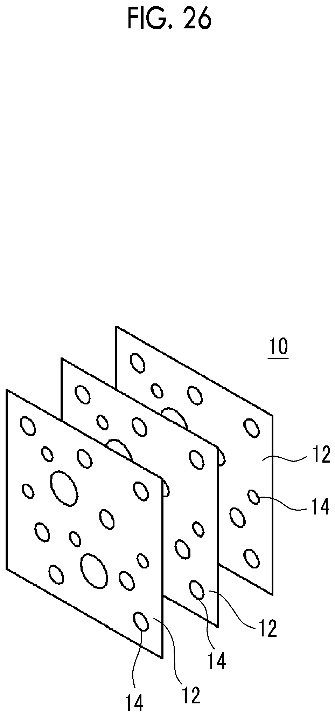

For example, the soundproof structure 10 shown in Fig. 26 is obtained by arranging three microperforated sheets 12 having the plurality of through-holes 14 in the thickness direction.

In a case where the two or more microperforated sheets 12 are arranged in the thickness direction, the microperforated sheets 12 may be in contact with each other or may be spaced from each other.

In a case where the microperforated sheets 12 are disposed to be spaced from each other, a spacer may be disposed between the microperforated sheets 12 at a position that does not hinder passage of the sound.

Here, as described above, the mechanism of sound absorption in the present invention is such that sound is converted into heat energy by friction in a case where the sound passes through the through-hole. Therefore, the sound absorbing performance increases as the local speed of air passing through the through-hole increases. Therefore, in a case of arranging two or more microperforated sheets 12, it is preferable that the microperforated sheets 12 are disposed to be spaced from each other. By disposing the microperforated sheets 12 to be spaced from each other, due to the effect of the microperforated sheet 12 disposed on a front stage in a direction in which sound passes, the local speed which is reduced in a case where the sound passes through the through-hole 14 of the microperforated sheet 12 disposed on a rear stage is suppressed, and thereby the sound absorption can be more suitably performed.

Here, in a case where a distance between the microperforated sheets is increased, not only the size is increased, but also the distance between the microperforated sheets is about a wavelength, so that flat sound absorption characteristics is lost due to sound interference. Therefore, a typical wavelength is preferably smaller than length of 100 mm of the sound wavelength at 3400 Hz, and more preferably smaller than length of 34 mm of the sound wavelength at 10000 Hz.

On the other hand, in a case where the distance between the microperforated sheets is close, the local speed reduced by the friction in the through-holes of the front stage microperforated sheet has an effect on the sound absorption in the rear stage microperforated sheet. Therefore, efficiency is improved by appropriately disposing the microperforated sheets to be spaced from each other.

From the viewpoint of suitably suppressing the local speed from being reduced in the case where the sound passes through the through-hole 14 of the rear stage microperforated sheet 12, the distance between the microperforated sheets 12 is preferably 5 mm to 100 mm, and more preferably 10 mm to 34 mm.

The soundproof structure of the embodiment of the present invention may have the wall member 30 disposed on one surface side of the microperforated sheet 12 so as to face the microperforated sheet and be spaced at a predetermined distance.

Since the wall member 30 is provided, the sound transmitted through the microperforated sheet 12 is totally reflected by the wall member 30 and is incident on the microperforated sheet 12 again. Therefore, the soundproofing performance can be further improved.

In addition, from the viewpoint of soundproofing performance and miniaturization, the distance between the microperforated sheet 12 and the wall member 30 is preferably 1 mm to 30 mm, and more preferably 2 mm to 10 mm.

Hereinafter, the physical properties or characteristics of a structural member that can be combined with a soundproof member having the soundproof structure according to the embodiment of the present invention will be described.

### [Flame retardance]

In a case of using a soundproof member having the soundproof structure according to the embodiment of the present invention as a soundproof material in a building or an apparatus, flame retardancy is required.

Therefore, the microperforated sheet is preferably flame retardant. In a case where resin is used as the microperforated sheet, for example, Lumirror (registered trademark) nonhalogen flame-retardant type ZV series (manufactured by Toray Industries, Inc.) that is a flame-retardant PET film, Teijin Tetoron (registered trademark) UF (manufactured by Teijin Ltd.), and/or Dialamy (registered trademark) (manufactured by Mitsubishi Plastics Co., Ltd.) that is a flame-retardant polyester film may be used.

Flame retardancy can also be given by using metal materials, such as aluminum, nickel, tungsten, and copper.

### [Heat resistance]

There is a concern that the soundproofing characteristics may be changed due to the expansion and contraction of the structural member of the soundproof structure according to the embodiment of the present invention due to an environmental temperature change. Therefore, the material forming the structural member is preferably a heat resistant material, particularly a material having low heat shrinkage.

In the case of using resin as the microperforated sheet, for example, Teijin Tetoron (registered trademark) film SLA (manufactured by Teijin DuPont Film), PEN film Teonex (registered trademark) (manufactured by Teijin DuPont), and/or Lumirror (registered trademark) off-anneal low shrinkage type (manufactured by Toray Industries, Inc.) are preferably used. In general, it is preferable to use a metal foil, such as aluminum having a smaller thermal expansion factor than a plastic material.

### [Weather resistance and light resistance]

In a case where the soundproof member having the soundproof structure according to the embodiment of the present invention is disposed outdoors or in a place where light is incident, the weather resistance of the structural member becomes a problem.

Therefore, in the case where resin is used as the microperforated sheet, it is preferable to use a weather-resistant film, such as a special polyolefin film (ARTPLY (registered trademark) (manufactured by Mitsubishi Plastics Inc.)), an acrylic resin film (ACRYPRENE (manufactured by Mitsubishi Rayon Co.)), and/or Scotch Calfilm (trademark) (manufactured by 3M Co.).

In addition, light resistance to ultraviolet light and the like can also be given by using a metal material, such as aluminum.

Regarding moisture resistance as well, it is preferable to appropriately select a microperforated sheet having high moisture resistance. Regarding water absorption and chemical resistance as well, it is preferable to appropriately select a microperforated sheet.

### [Dust]

During long-term use, dust may adhere to the microperforated sheet surface to affect the soundproofing characteristics of the soundproof structure according to the embodiment of the present invention. Therefore, it is preferable to prevent the adhesion of dust or to remove adhering dust.

As a method of preventing dust, it is preferable to use the microperforated sheet formed of a material to which dust is hard to adhere. For example, by using a conductive film (Flecria (registered trademark) (manufactured by TDK Corporation) and/or NCF (Nagaoka Sangyou Co., Ltd.)) so that the microperforated sheet is not charged, it is possible to prevent adhesion of dust due to charging. By selecting a microperforated sheet having conductivity like a metal material such as aluminum, it is possible to prevent the adhesion of dust due to static electricity.

It is also possible to suppress the adhesion of dust by using a fluororesin film (Dynoch Film (trademark) (manufactured by 3M Co.)), and/or a hydrophilic film (Miraclain (manufactured by Lifegard Co.), RIVEX (manufactured by Riken Technology Inc.) and/or SH2CLHF (manufactured by 3M Co.)). By using a photocatalytic film (Raceline (manufactured by Kimoto Corporation)), contamination of the microperforated sheet can also be prevented. A similar effect can also be obtained by applying a spray having the conductivity, hydrophilic property and/or photocatalytic property and/or a spray containing a fluorine compound to the microperforated sheet.

In addition, by forming a hydrophilic surface including the inside of holes by silica coating and forming a hydrophobic surface by fluorine coating and using the hydrophilic surface and the hydrophobic surface at the same time, it is possible to realize anti-contamination coating by which both hydrophilic dirt and hydrophobic dirt are easily peeled off.

In addition to using the special materials described above, it is also possible to prevent contamination by providing a cover on the microperforated sheet. As the cover, it is possible to use a thin film material (Saran Wrap (registered trademark) or the like), a mesh (formed of metal, plastic, or the like) having a mesh size not allowing dust to pass therethrough, a nonwoven fabric, a urethane, an airgel, a porous film, and the like.

In a case where a particularly thin film material or the like is used as the cover, in order to maintain the effect of the through-hole, the thin film material or the like is preferably formed away from the microperforated sheet 12 without attaching the thin film material or the like to the microperforated sheet 12. In addition, in a case where the thin film material is fixed with the thin film material stretched in order to make sound pass through the thin film material without strong film vibration, film vibration tends to occur. For this reason, it is desirable that the thin film material is loosely supported.

As a method of removing adhering dust, it is possible to remove dust by emitting a sound to the microperforated sheet so that the microperforated sheet strongly vibrates. The same effect can be obtained even in a case where a blower or wiping is used.

### [Wind pressure]

In a case where a strong wind hits the microperforated sheet, the microperforated sheet may be pressed to change a resonance frequency. Therefore, by covering the microperforated sheet with nonwoven fabric, urethane, and/or a film, the influence of wind can be suppressed.

The soundproof structure 10 according to the embodiment of the present invention is used in a copying machine, a blower, air conditioning equipment, a ventilator, a pump, a generator, a duct, industrial equipment including various kinds of manufacturing equipment capable of emitting sound such as a coating machine, a rotary machine, and a conveyor machine, transportation equipment such as an automobile, a train, and aircraft, general household equipment such as a refrigerator, a washing machine, a dryer, a television, a copying machine, a microwave oven, a game machine, an air conditioner, a fan, a PC (Personal Computer), a vacuum cleaner, an air purifier, and a ventilator, and the like. The soundproof structure is appropriately disposed at a position through which sound generated from a noise source passes in various apparatuses.

The soundproof structure according to the embodiment of the present invention is not limited to being used in various apparatuses, such as industrial equipment, transportation equipment, and general household equipment, and can also be used in a fixed wall, such as a fixed partition structure (partition) that is disposed in a room of a building to partition the inside of the room, and a movable wall, such as a movable partition structure (partition) that is disposed in a room of a building to partition the inside of the room.

Thus, by using the soundproof structure according to the embodiment of the present invention as a partition, it is possible to suitably shield sound between the partitioned spaces. In particular, in the case of a movable partition, the thin and light structure according to the embodiment of the present invention is advantageous in that the structure is easy to carry.

The soundproof structure of the embodiment of the present invention has light transmittance and air permeability, and therefore can be suitably used as a window member.

Alternatively, the soundproof structure according to the embodiment of the present invention can also be used as a cage that surrounds an apparatus that becomes a noise source, for example, an air conditioner outdoor unit or a water heater, for noise prevention. By surrounding the noise source with the member, it is possible to absorb sound while securing heat dissipation and air permeability and accordingly to prevent noise.

In addition, the soundproof structure according to the embodiment of the present invention may be used for a pet breeding cage. By applying the member according to the embodiment of the present invention to the entire pet breeding cage or a part of the pet breeding cage, for example, by replacing one surface of the pet cage with this member, it is possible to obtain the pet cage that is lightweight and has a sound absorption effect. By using this cage, it is possible to protect the pet in the cage from outside noise, and it is possible to suppress the crying sound of the pet in the cage from leaking to the outside.

In addition to those described above, the soundproof structure according to the embodiment of the present invention can be used as the following soundproof members.

For example, as soundproof members having the soundproof structure according to the embodiment of the present invention, it is possible to mention: a soundproof member for building materials (soundproof member used as building materials); a soundproof member for air conditioning equipment (soundproof member installed in ventilation openings, air conditioning ducts, and the like to prevent external noise); a soundproof member for external opening portion (soundproof member installed in the window of a room to prevent noise from indoor or outdoor); a soundproof member for ceiling (soundproof member installed on the ceiling of a room to control the sound in the room); a soundproof member for floor (soundproof member installed on the floor to control the sound in the room); a soundproof member for internal opening portion (soundproof member installed in a portion of the inside door or sliding door to prevent noise from each room); a soundproof member for toilet (soundproof member installed in a toilet or a door (indoor and outdoor) portion to prevent noise from the toilet); a soundproof member for balcony (soundproof member installed on the balcony to prevent noise from the balcony or the adjacent balcony); an indoor sound adjusting member (soundproof member for controlling the sound of the room); a simple soundproof chamber member (soundproof member that can be easily assembled and can be easily moved); a soundproof chamber member for pet (soundproof member that surrounds a pet's room to prevent noise); amusement facilities (soundproof member installed in a game centers, a sports center, a concert hall, and a movie theater); a soundproof member for temporary enclosure for construction site (soundproof member to prevent leakage of noise by covering the construction site); and a soundproof member for tunnel (soundproof member installed in a tunnel to prevent noise leaking to the inside and outside the tunnel).

Alternatively, the soundproof structure according to the embodiment of the present invention can be used as a member which covers up a gap formed in a wall or the like, as a window member and a screen window member.

### Examples

Hereinafter, the present invention will be described in more detail by way of Examples. Materials, the amount of use, ratios, processing content, processing procedures, and the like shown in the following Examples can be appropriately changed without departing from the gist of the present invention. Therefore, the range of the present invention should not be interpreted restrictively by the following Examples.

### [Example 1]

### <Manufacturing of microperforated sheet>

A plurality of protruding portions having a truncated-cone shape each having a lower bottom diameter of 30 µm, an upper bottom diameter of 20 µm, and height of 10 µm were formed in a predetermined arrangement pattern on the silicon substrate using an etching method by photolithography. In a case of performing wet etching using a solution obtained by diluting nitrohydrofluoric acid in which hydrofluoric acid and nitric acid are mixed, the silicon substrate can be naturally tapered to perform isotropic etching. In this case, in a case of increasing the hydrofluoric acid ratio, a sharp shape is obtained, and in a case of decreasing the hydrofluoric acid ratio, a round shape is obtained, and thus the shape can be adjusted. Even in a case of performing plasma etching on the silicon substrate, isotropic etching is possible by performing etching using fluorine radicals. In this Example, wet etching conditions were adjusted to perform the manufacturing. The center-to-center distance between adjacent protruding portions was 119 µm, and the arrangement pattern was a square grid arrangement. In this case, an area ratio occupied by the protruding portions is about 2.2% on the upper bottom.

Then, using a nickel electroforming method, that is, electrochemical reaction, nickel was electrodeposited on a silicon substrate using the silicon substrate, on which the protruding portions were formed, as a prototype to form a nickel film having a thickness of 10 µm. Thereafter, the nickel film was peeled off from the silicon substrate and subjected to surface polishing. As a result, a nickel microstructure sheet having a plurality of tapered-holes formed in a square grid arrangement was manufactured.

When the manufactured microstructure sheet was evaluated using SEM, the average opening diameter was 30 µm on one surface and 20 µm on the other surface. The average opening ratio was 2.2% and the thickness was 10 µm. In addition, it was also confirmed that the through-hole completely penetrated through a microperforated sheet in the thickness direction.

The average opening ratio is an opening ratio based on the minimum hole diameter. Therefore, it is possible to evaluate a light transmission arrangement using an optical microscope without using the SEM. The evaluation was actually performed, and even in the optical evaluation, the average opening ratio is analyzed 2.2%.

Two microstructure sheets manufactured as described above were prepared, and surfaces on a side where the diameter of the tapered-hole was large (30 µm) were faced to be overlapped. Since the tapered-holes are formed on the two microstructure sheets with at the same distance, in a case where relative positions of the two microstructure sheets are appropriately shifted while applying the transmitted light from the lower side, there is a disposition in which light is transmitted through the overlapping tapered-holes. By overlapping tapered-holes to maximize an amount of transmitted light, the tapered-holes are overlapped to form a through-hole A having an internal maximum hole diameter and a shape having the same hole diameters. The air between the two microstructure sheets is removed so that the two microstructure sheets are not substantially deviated. After adjusting the relative position of the two microstructure sheets and removing the air therebetween, the end portions were fixed with tape, and the microperforated sheet was manufactured by performing a treatment for which the microperforated sheets were not deviated.

That is, the minimum hole diameter φ₁ of the through-hole A of the microperforated sheet is 20 µm, and the maximum hole diameter φ₂ is 30 µm. The average opening ratio is 2.2% and the thickness is 20 µm. All the through-holes are through-holes A. The sample size was 30 cm × 30 cm.

The optimum opening ratio ρₛ in a case of the minimum hole diameter φ₁ = 20 µm and the straight tube shape is ρₛ = 18.7 × φ₁^{-2.04} ≈ 4.1%. ρ_{c}/ρₛ = 0.30 × ln(φ₁) -C, and therefore, C = 0.38.

### [Examples 2 to 4]

As Examples 2 to 4, microperforated sheets were manufactured in the same manner as in Example 1 except that the opening ratios were 3.0%, 4.1%, and 6.0%, respectively.

The opening ratio can be adjusted by changing a distance between centers of the protruding portions formed on the silicon substrate.

### [Comparative Example 1]

An example in which the magnification ratio φ₂/φ₁ is ten times was examined. In a case where the opening ratio is 2.2%, an area ratio of the internal maximum hole diameter φ₂ portion is 220%, which cannot be manufactured.

### [Comparative Example 2]

An example in which the magnification ratio φ₂/φ₁ is six times was examined. In a case where the opening ratio is 2.2%, the area ratio of the internal maximum hole diameter φ₂ portion is 79%. When Comparative Example 2 was manufactured, the holes were connected inside, and thus high sound absorption characteristics could not be obtained.

### [Comparative Example 3]

A microperforated sheet was manufactured in the same manner as in Example 1 except that the minimum hole diameter φ₁ was 200 µm and the magnification ratio φ₂/φ₁ was 1.5 times (the maximum hole diameter φ₂ was 300 µm).

### [Reference Example 1]

A microperforated sheet having a through-hole with a straight tube shape was manufactured using the same nickel electroforming method as in Example 1. The opening diameter was 20 µm and the opening ratio was 2.2%.

### [Evaluation]

### <Acoustic characteristics>

The acoustic characteristics of the manufactured microperforated sheet which is the soundproof structure were measured by a transfer function method using four microphones with respect to a self-made acrylic acoustic tube. This method is based on "ASTM E2611-09: Standard Test Method for Measurement of Normal Incidence Sound Transmission of Acoustical Materials Based on the Transfer Matrix Method". The acoustic tube has the same measurement principle as, for example, WinZac manufactured by Nihon Onkyo Engineering Co., Ltd.. It is possible to measure the sound transmission loss in a wide spectral band using this method. In particular, the transmittance and the reflectance were measured at the same time so that the absorbance of the sample was also accurately measured. The inner diameter of the acoustic tube was 20 mm.

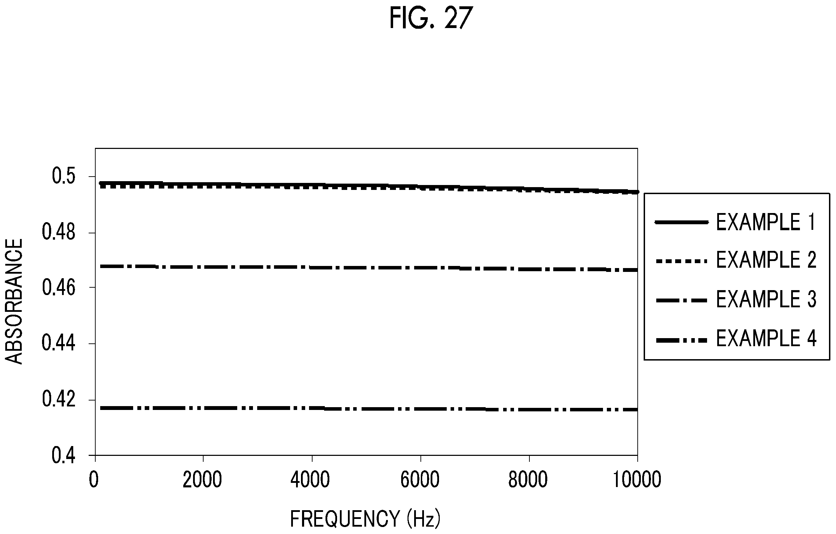

The measurement results are shown in Fig. 27.

### <Appearance>

In an arrangement in which light is applied from a rear surface side of the microperforated sheet, light is transmitted according to the number of through-holes and the minimum hole diameter, that is, according to the opening ratio. The light transmittance is simply proportional to the opening ratio. Since the larger the opening ratio, the more light is transmitted, appearance of the soundproof structure looks different from the original material thereof. Therefore, by evaluating the opening ratio, it is possible to evaluate whether appearance of the soundproof structure is close to the appearance of the original material.

Regarding the touch feeling, the smaller the opening ratio, the closer to the original material. Therefore, the touch feeling can be evaluated so as to evaluate the opening ratio.

As a result of the evaluation, it can be seen from Fig. 27 that the sound absorbance is maximum in the opening ratio of around 2.2% (Example 1) and 3.0% (Example 2). From this, it can be seen that the sound absorbance is maximized at the opening ratio lower than the optimum opening ratio (4.1%) when the through-hole is a straight tube shape.

It can be seen that Examples 1 and 2 are 49.5% or more in the entire frequency band in which the measurement was performed. Since the upper limit of the absorbance of the single layer film in the four-terminal method arrangement is 50%, it can be seen that a large absorbance is exhibited.

In addition, as described above, the microperforated sheet in Example has a smaller optimum opening ratio at which the absorbance is maximum than the microperforated sheet having the through-hole with the straight tube shape, which has the same hole diameter as the minimum hole diameter φ₁. Therefore, an amount of light transmission is reduced. Therefore, it can be seen that Example is likely to be the original material in terms of appearance and touch feeling as compared with the microperforated sheet having the through-holes with the straight tube shape.

On the other hand, as in Reference Example 1, when the absorbance in a case where the through-hole has the straight tube shape and the opening ratio of 2.2%, the same as in Example 1, is measured on 44.7%. Thus, it can be seen that in a case where the opening ratio is reduced in order to leave the appearance and texture of the original material, the absorbance of the microperforated sheet having the through-hole with the straight tube shape is smaller than the absorbance in Example.

Furthermore, the absorbance of Comparative Example 3 having the minimum hole diameter φ₁ of 200 µm was less than 5%.

### [Examples 5 to 9]

Microperforated sheets were manufactured in the same manner as in Example 1 except that the minimum hole diameter φ₁ is 10 µm, the maximum hole diameter φ₂ is 15 µm, and the opening ratios were 6%, 8%, 10%, 17%, 20% respectively, and the evaluation was performed.

The optimum opening ratio ρₛ in a case of the minimum hole diameter φ₁ = 10 µm and the straight tube shape is ρₛ = 18.7 × φ₁^{-2.04} ≈ 17%.

### [Reference Example 2]

A microperforated sheet having a through-hole with a straight tube shape was manufactured using the same nickel electroforming method as in Example 6. The opening diameter was 10 µm and the opening ratio was 8%.

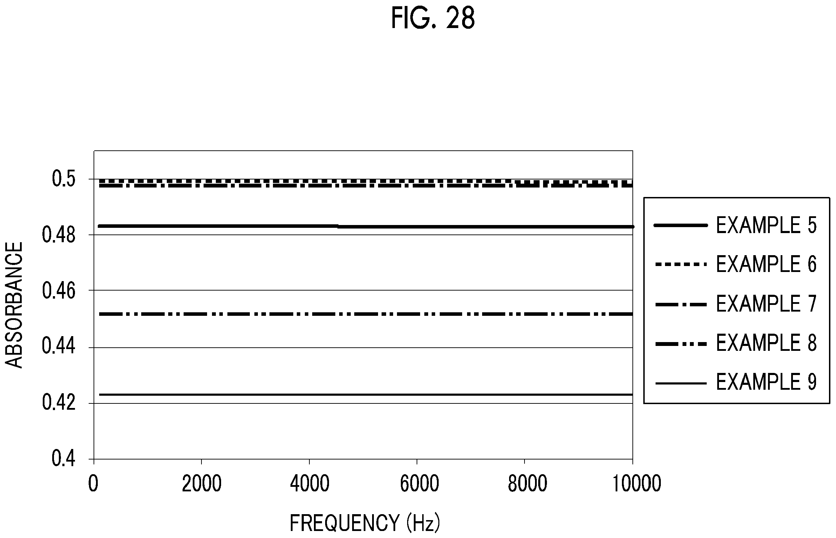

The measurement results of the acoustic characteristics are shown in Fig. 28.

It can be seen from Fig. 28 that the sound absorbance is maximum in the opening ratio of around 8% (Example 6) and 10% (Example 7). From this, it can be seen that the sound absorbance is maximized at the opening ratio lower than the optimum opening ratio (17%) when the through-hole is a straight tube shape.

In addition, the microperforated sheet of Example has a smaller optimum opening ratio at which the absorbance is maximum than the microperforated sheet having the through-hole with the straight tube shape, which has the same hole diameter as the minimum hole diameter φ₁. Therefore, it can be seen that Example is likely to be the original material in terms of appearance and touch feeling as compared with the microperforated sheet having the through-holes with the straight tube shape.

On the other hand, as in Reference Example 2, when the absorbance in a case where the through-hole has the straight tube shape and the opening ratio of 8%, the same as in Example 5, is measured on 43%. Thus, it can be seen that in a case where the opening ratio is reduced in order to leave the appearance and texture of the original material, the absorbance of the microperforated sheet having the through-hole with the straight tube shape is smaller than the absorbance in Example.

### [Example 5-2]

Next, a microperforated sheet having the minimum hole diameter φ₁ of 10 µm, the maximum hole diameter φ₂ of 15 µm (magnification ratio φ₂/φ₁ is 1.5 times), and the opening ratio in the range of 6% to 20% was manufactured, a microperforated sheet having the minimum hole diameter φ₁ of 10 µm, the maximum hole diameter φ₂ of 30 µm (magnification ratio φ₂/φ₁ is 3.0 times), and the opening ratio in the range of 6% to 20% was manufactured, and the acoustic characteristics of each microperforated sheet were measured.

The measurement results of the absorbance at 3000 Hz are shown in Table 3.

**[Table 3]**

| Opening ratio % | Magnification ratio ϕ₂/ϕ₁ | |
|---|---|---|
| | 1.5 times | 3.0 times |
| 6 | 48.30% | 50.00% |
| 6.4 | 48.30% | 50.00% |
| 8 | 49.90% | 49.30% |
| 10 | 49.80% | 47.50% |
| 12 | 48.70% | 45.30% |
| 14 | 47.30% | 43.00% |
| 16 | 45.70% | 40.80% |
| 16.6 | 45.20% | 40.20% |
| 18 | 44.00% | 38.60% |
| 20 | 42.30% | 36.60% |

It can be seen from Table 3 that a case where the magnification ratio φ₂/φ₁ is 3.0 times has the more optimum opening ratio at the small opening ratio than a case where the magnification ratio φ₂/φ₁ is 1.5 times.

### [Example 10]

A microperforated sheet was manufactured in the same manner as in Example 1 except that the through-hole shape is a shape having different hole diameters including a minimum hole diameter φ₁ = 10 µm on one surface, a larger hole diameter φ₃ = 15 µm than the minimum hole diameter φ₁ on the other surface, and an internal maximum hole diameter φ₂ = 20 µm, and the opening ratio is 3.0%, and the evaluation was performed.

That is, a microperforated sheet was manufactured by overlapping two microstructure sheets having different tapered-hole shapes from each other. A tapered-hole of one microstructure sheet has the opening diameter of 10 µm on one surface and the opening diameter of 20 µm on the other surface, and a tapered-hole of the other microstructure sheet has the opening diameter of 15 µm on one surface and the opening diameter of 20 µm on the other surface.

### [Examples 11 to 14]

As Examples 11 to 14, microperforated sheets were manufactured in the same manner as in Example 6 except that the opening ratios were 4.0%, 5.0%, 16.6%, and 20.0% respectively, and the evaluations were performed.

The opening ratio was adjusted by changing a distance between centers of the protruding portions formed on the silicon substrate.

### [Reference Example 3]

A microperforated sheet having a through-hole with a straight tube shape was manufactured using the same nickel electroforming method as in Example 11. The opening diameter was 10 µm and the opening ratio was 4%.

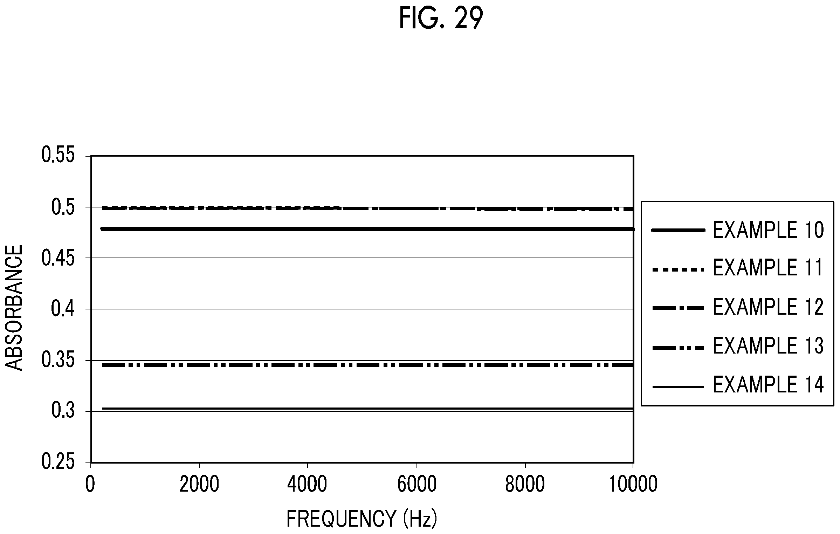

The measurement results of the acoustic characteristics are shown in Fig. 29.

It can be seen from Fig. 29 that the sound absorbance is maximum in the opening ratio of around 4% (Example 11) and 5% (Example 12). From this, it can be seen that the sound absorbance is maximized at the opening ratio lower than the optimum opening ratio (17%) when the through-hole is a straight tube shape.

In addition, the microperforated sheet of Example has a smaller optimum opening ratio at which the absorbance is maximum than the microperforated sheet having the through-hole with the straight tube shape, which has the same hole diameter as the minimum hole diameter φ₁. Therefore, it can be seen that Example is likely to be the original material in terms of appearance and touch feeling as compared with the microperforated sheet having the through-holes with the straight tube shape.

On the other hand, as in Reference Example 3, when the absorbance in a case where the through-hole has the straight tube shape and the opening ratio of 4%, the same as in Example 11, is measured on 30%. Thus, it can be seen that in a case where the opening ratio is reduced in order to leave the appearance and texture of the original material, the absorbance of the microperforated sheet having the through-hole with the straight tube shape is smaller than the absorbance in Example. In particular, the difference of the optimum opening ratio between the microperforated sheet having the through-hole including a shape having different hole diameters and the microperforated sheet having the through-hole with the straight tube shape is large, so that there is a large difference in the absorbance.

### [Example 11-2]

Next, a microperforated sheet having the minimum hole diameter φ₁ of 10 µm, the maximum hole diameter φ₂ of 15 µm (magnification ratio φ₂/φ₁ is 1.5 times), the hole diameter φ₃ on the other surface of 12.5 µm, and the opening ratio in the range of 1% to 20% was manufactured, a microperforated sheet having the minimum hole diameter φ₁ of 10 µm, the maximum hole diameter φ₂ of 40 µm (magnification ratio φ₂/φ₁ is 4.0 times), the hole diameter φ₃ on the other surface of 25 µm, and the opening ratio in the range of 1% to 20% was manufactured, and the acoustic characteristics of each microperforated sheet were measured.

The measurement results of the absorbance at 3000 Hz are shown in Table 4.

**[Table 4]**

| Opening ratio % | Magnification ratio ϕ₂/ϕ₁ | |
|---|---|---|
| | 1.5 times | 4.0 times |
| 1 | 29.50% | 35.70% |
| 2 | 42.40% | 47.00% |
| 3 | 47.90% | 49.90% |
| 4 | 49.80% | 49.60% |
| 5 | 49.90% | 48.00% |
| 6 | 49.10% | 45.80% |
| 7 | 47.70% | 43.70% |
| 8 | 46.20% | 41.50% |
| 12 | 39.90% | 34.00% |
| 16 | 34.60% | 28.80% |
| 17 | 33.40% | 27.60% |
| 20 | 30.30% | 25.00% |

It can be seen from Table 4 that a case where the magnification ratio φ₂/φ₁ is 4.0 times has the more optimum opening ratio at the small opening ratio than a case where the magnification ratio φ₂/φ₁ is 1.5 times.

### [Examples 15 to 18]

As Examples 15 to 18, microperforated sheets were manufactured in the same manner as in Example 6 except that the through-hole shape is a shape having different hole diameters including a minimum hole diameter φ₁ = 20 µm on one surface, a larger hole diameter φ₃ = 25 µm than the minimum hole diameter φ₁ on the other surface, and an internal maximum hole diameter φ₂ = 30 µm, and the opening ratios are respectively 1.0%, 2.0%, 4.5%, and 6.0% and the evaluation was performed.

### [Reference Example 4]

A microperforated sheet having a through-hole with a straight tube shape was manufactured using the same nickel electroforming method as in Example 16. The opening diameter was 20 µm and the opening ratio was 2%.

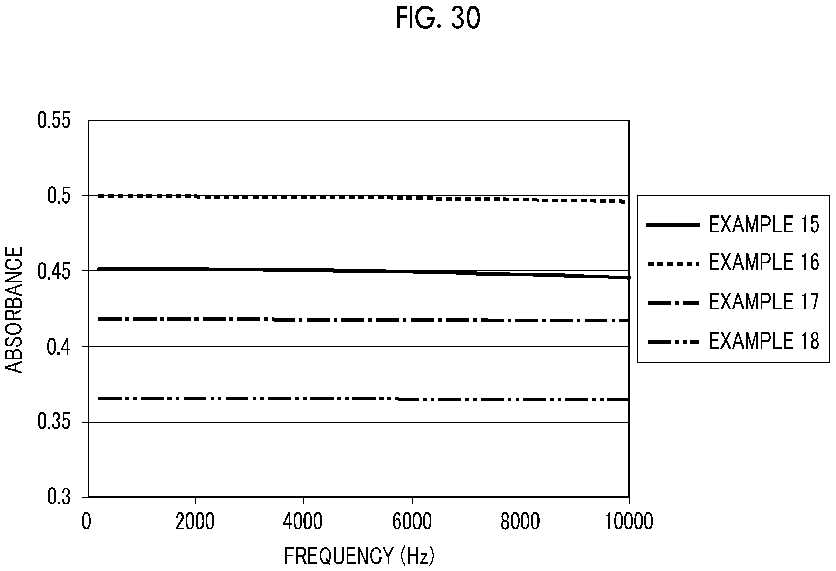

The measurement results of the acoustic characteristics are shown in Fig. 30.

It can be seen from Fig. 30 that the sound absorbance is maximum in the opening ratio of around 2% (Example 16). From this, it can be seen that the sound absorbance is maximized at the opening ratio lower than the optimum opening ratio (4.1%) when the through-hole is a straight tube shape.

In addition, the microperforated sheet of Example has a smaller optimum opening ratio at which the absorbance is maximum than the microperforated sheet having the through-hole with the straight tube shape, which has the same hole diameter as the minimum hole diameter φ₁. Therefore, it can be seen that Example is likely to be the original material in terms of appearance and touch feeling as compared with the microperforated sheet having the through-holes with the straight tube shape.

On the other hand, as in Reference Example 4, when the absorbance in a case where the through-hole has the straight tube shape and the opening ratio of 2%, the same as in Example 16, is measured on 31%. Thus, it can be seen that in a case where the opening ratio is reduced in order to leave the appearance and texture of the original material, the absorbance of the microperforated sheet having the through-hole with the straight tube shape is smaller than the absorbance in Example. In particular, the difference of the optimum opening ratio between the microperforated sheet having the through-hole including a shape having different hole diameters and the microperforated sheet having the through-hole with the straight tube shape is large, so that there is a large difference in the absorbance.

### [Example 15-2]

Next, a microperforated sheet having the minimum hole diameter φ₁ of 20 µm, the maximum hole diameter φ₂ of 30 µm (magnification ratio φ₂/φ₁ is 1.5 times), the hole diameter φ₃ on the other surface of 25 µm, and the opening ratio in the range of 1% to 6% is manufactured, and the acoustic characteristics of each microperforated sheet were measured.

The measurement results of the absorbance at 3000 Hz are shown in Table 5.

**[Table 5]**

| Opening ratio % | Magnification ratio ϕ₂/(ϕ₁ |
|---|---|
| | 1.5 times |
| 1 | 45.10% |
| 1.5 | 49.20% |
| 2 | 49.90% |
| 2.5 | 49.10% |
| 3 | 47.50% |
| 3.5 | 45.60% |
| 4 | 43.70% |
| 4.5 | 41.80% |
| 5 | 39.90% |
| 5.5 | 38.20% |
| 6 | 36.60% |

It can be seen from Table 5 that Example can obtain high sound absorbance at the opening ratio lower than the optimum opening ratio in the case of the straight tube shape.

### [Simulation]

Next, regarding a case of the through-hole having the shape having different hole diameters, the simulation using finite element method calculation software COMSOL ver 5.3 (COMSOL Corporation) was performed by changing the minimum hole diameter φ₁ to be in the range of 10 µm to 30 µm and the opening ratio to be in the range of 0 to 20% to evaluate the absorbance.

The maximum hole diameter φ₂ was φ₂ = 1.5 × φ₁, and the hole diameter φ₃ was φ₃ = ((φ₂/φ₁-1) × 0.5 + 1) × φ1.

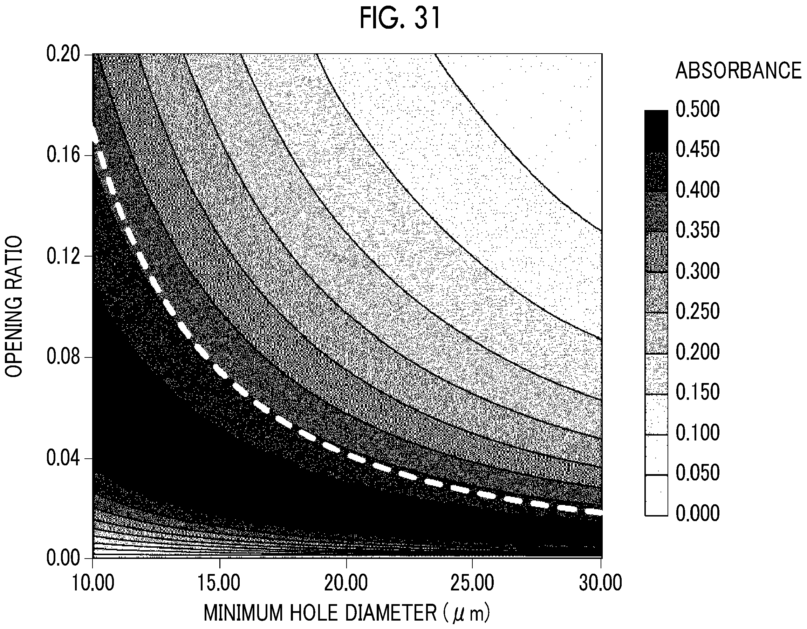

The results are shown in Fig. 31. In addition, in Fig. 31, the line connecting values of the optimum opening ratio in a case of the straight tube shape is shown with a broken line.

It can be seen from Fig. 31 that the absorbance is maximized at the opening ratio lower than the optimum opening ratio ρₛ in the case of the straight tube shape in any case of minimum hole diameter φ₁. That is, it can be seen that there is a large difference between the optimum opening ratio ρ_{c1} in which the smaller the minimum hole diameter φ₁, the larger the absorbance and the optimum opening ratio ρₛ in the case of the straight tube shape.

From the above, the effect of the present invention is apparent.

### Explanation of References

10: soundproof structure
12: microperforated sheet
13: microstructure sheet
14: through-hole
15: tapered-hole
16: frame
17: hole portion
20: porous sound absorbing body
30: wall member

## Claims

1. A soundproof structure comprising:
a microperforated sheet having a plurality of through-holes penetrating in a thickness direction,
wherein an average opening diameter of the through-holes in a main surface of the microperforated sheet is 0.1 µm or more and less than 100 µm,
at least some of the plurality of through-holes are a through-hole A that has a shape having an internal maximum hole diameter, and
in the through-hole A, assuming that a minimum hole diameter is φ₁ and a maximum hole diameter is φ₂, 1 < φ₂/φ₁ ≤ 5 is satisfied.

2. The soundproof structure according to claim 1,
wherein in a case where the minimum hole diameter φ₁ (µm) and the maximum hole diameter φ₂ (µm) of the through-hole A are in a range of 2 ≤ φ₂/φ₁ ≤ 5, assuming that the average opening ratio of the through-holes is ρ_{c}, an optimum opening ratio in a case where the through-hole has a straight tube shape and has a hole diameter of the minimum hole diameter φ₁ is ρₛ, and C is a positive constant from 0.20 to 0.70, the optimum opening ratio ρₛ is ρₛ = 18.7 × φ₁^{-2.04} and ρ_{c}/ρₛ = 0.30 × ln(φ₁) - C is satisfied.

3. The soundproof structure according to claim 1,
wherein in a case where the minimum hole diameter φ₁ (µm) and the maximum hole diameter φ₂ (µm) of the through-hole A are in a range of 1 < φ₂/φ₁ < 2, assuming that the average opening ratio of the through-holes is ρ_{c}, an optimum opening ratio in a case where the through-hole has a straight tube shape and has a hole diameter of the minimum hole diameter φ₁ is ρₛ, and C is a positive constant from 0.20 to 0.70, the optimum opening ratio ρₛ is ρₛ = 18.7 × φ₁^{-2.04} and ρₛ × (0.30 × ln(φ₁) - C) < ρ_{c} < ρₛ is satisfied.

4. The soundproof structure according to claim 2 or 3,
wherein among the plurality of through-holes A, through-hole shapes having a shape having the minimum hole diameter φ₁ on both main surfaces of the microperforated sheet are largest in number, and
the constant C is 0.20 or more and 0.48 or less.

5. The soundproof structure according to claim 2 or 3,
wherein among the plurality of through-holes A, through-hole shapes having a shape having the minimum hole diameter φ₁ on one main surface of the microperforated sheet and a hole diameter φ₃ satisfying φ₁ < φ₃ < φ₂ on the other main surface are largest in number, and
the constant C is 0.46 or more and 0.70 or less.

6. The soundproof structure according to any one of claims 1 to 5,
wherein a ratio of the through-holes A to all through-holes is 30% or more.

7. The soundproof structure according to any one of claims 1 to 6,
wherein the through-hole A has the minimum hole diameter on at least one main surface.

8. The soundproof structure according to any one of claims 1 to 7,
wherein the microperforated sheet is configured to laminate two microstructure sheets,
the microstructure sheet has a plurality of tapered-holes which are formed to have a maximum diameter on one surface and a minimum diameter on the other surface,
the two microstructure sheets are laminated so that surfaces thereof on a side where the tapered-holes have the maximum diameter face each other, and
positions of the tapered-holes on each of the two microstructure sheets in a surface direction are aligned with each other to form the through-hole A.

9. The soundproof structure according to any one of claims 1 to 8,
wherein a material of the microperforated sheet is metal.

10. The soundproof structure according to any one of claims 1 to 9,
wherein the plurality of through-holes are randomly arranged.

11. The soundproof structure according to any one of claims 1 to 10, further comprising:
a porous sound absorbing body disposed in contact with one main surface of the microperforated sheet.

12. The soundproof structure according to claim 11, further comprising:
a wall member on a side opposite to the microperforated sheet of the porous sound absorbing body,
wherein the porous sound absorbing body and the wall member are disposed in a state in which the porous sound absorbing body and the wall member are at least partially in contact with each other.

13. The soundproof structure according to any one of claims 1 to 11, further comprising:
a wall member disposed to be spaced from the microperforated sheet.

14. The soundproof structure according to any one of claims 1 to 13, further comprising:
a frame disposed in contact with one main surface of the microperforated sheet.

15. The soundproof structure according to any one of claims 1 to 14,
wherein the microperforated sheet is used as a part of a wall or a gap closing member.
